# EUROPÄISCHE PATENTSCHRIFT

(11) **EP 3 764 057 B1**
(45) Veröffentlichungstag und Bekanntmachung des Hinweises auf die Patenterteilung: **11.12.2024**
(21) Anmeldenummer: 19185324.1
(22) Anmeldetag: 09.07.2019
(51) Int. Cl.: G01C 15/00, G01S 17/42, G01S 17/50, G01S 17/89

(54) **VERFAHREN ZUM ERMITTELN DER EIGNUNG EINER POSITION ALS VERMESSUNGSSTATIONIERUNG**
METHOD FOR DETERMINING THE SUITABILITY OF A POSITION AS MEASUREMENT STATIONING
PROCÉDÉ DE DÉTERMINATION DE L'APTITUDE D'UNE POSITION EN TANT QUE POSITIONNEMENT DE MESURE

(43) Veröffentlichungstag der Anmeldung: 13.01.2021
(73) Patentinhaber: Hexagon Technology Center GmbH, 9435 Heerbrugg (CH)
(72) Erfinder: METZLER, Bernhard, 6850 Dornbirn (AT); SCHEJA, Jochen, 6845 Hohenems (AT)
(74) Vertreter: Kaminski Harmann

(56) Entgegenhaltungen:
- JP-A- 2018 138 883
- US-A1- 2017 123 066
- US-A1- 2019 162 853

## Beschreibung

Die vorliegende Erfindung betrifft ein Verfahren zum Vor-Ort-Ermitteln einer Eignung einer Position eines terrestrischen Koordinatenmessgeräts, insbesondere eines Laserscanners oder einer Totalstation, als Stationierung nach Anspruch 1.

Für die Aufnahme von Eigenschaften definierter Punkte in einer Messumgebung, insbesondere von Daten mit räumlichem Bezug, sind seit der Antike eine Vielzahl von Messverfahren bekannt. Als räumliche Standarddaten werden dabei die Position und Ausrichtung eines Vermessungsgerätes sowie Richtung, Entfernung und Winkel zu Messpunkten aufgenommen. Ein allgemein bekanntes Beispiel für solche koordinative Vermessungsgeräte bzw. geodätische Geräte stellt der Theodolit bzw. eine Totalstation dar, welche für hochgenaue Einzelpunktmessungen vorgesehen sind. Ein geodätisches Vermessungsgerät des Stands der Technik ist beispielsweise in der EP 1 686 350 beschrieben. Eine andere Art gattungsgemässer terrestrischer Koordinatenmessgeräte sind scannende Geräte wie ein Laserscanner, welche ausgebildet sind zur Aufnahme einer sehr grossen Zahl von Objektpunkten, um damit z.B. Gebäude- oder Werkstückoberflächen in Form von Punktwolken dreidimensional abzubilden. Moderne Geräte können eine in Zielrichtung ausgerichtete und/oder verschwenkbare Kamera zur Erfassung eines Bildes aufweisen, wobei das erfasste Bild insbesondere als Live-Bild auf dem Display der Anzeige-Steuereinheit und/oder auf einem Display eines verbundenen Peripheriegeräts wie z.B. einem Tablet dargestellt werden kann.

Solche terrestrischen, stationierbare Geräte verfügen über Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung noch mit einem äusseren Bezugssystem verknüpft werden, wozu i.d.R. die Position des Vermessungsgerätes im äusseren Bezugssystem als Grundlage dient.

Grundsätzlich können derartige Stationskoordinaten und auch die Ausrichtung des Messgerätes am Standort als sogenannte freie Stationierung aus Messungen zu bereits absolut referenzierten Punkten der Messumgebung berechnet werden. Aus dem Stand der Technik ist eine Vielzahl von Verfahren bekannt, mit denen eine Referenzierung der jeweiligen Geräteposition als Stationierung ermöglicht wird. Auch sind Verfahren bekannt, mit denen sich im Nachhinein mehrere Messbereiche einer Messumgebung von unterschiedlichen Stationierungen aufeinander bzw. auf ein und dasselbe Referenzsystem beziehen lassen, z.B. im Post-Processing als sog. Registrierung von 3D-Punktwolken.

Eine Messumgebung ist oft nicht von einer einzigen Stationierung aus vollständig vermessbar, z.B. weil eine oder mehrere Seiten eines Objekt vom Gerät abgewandt sind, es sich um eine verwinkelte Messumgebung handelt (beispielsweise mehrere Räume eines Gebäudes) oder Objekte teilweise durch andere Objekte verschattet sind. Deshalb ist üblicherweise eine einzige Stationierung nicht ausreichend, sondern das Gerät muss von mehreren Positionen aus die Messumgebung vermessen. Dabei sollen alle relevanten Messumgebungsbereiche bzw. alle erforderlichen Objektpunkte vermessen werden, also ein lückenloses Vermessen erfolgen. Es ist hierbei für einen Benutzer oft schwierig oder zeitaufwändig zu entscheiden, welche Position als Stationierung geeignet ist oder - insbesondere bei sehr vielen erforderlichen Stationierungeneinen optimalen Messpfad (als sukzessive Abfolge von Vermessungsstandorten) zu finden, welcher unnötige Stationierungen bzw. doppelte Vermessungen vermeiden, ohne dabei andererseits Umgebungsbereiche zu "vergessen".

Die EP 1 903 303 B1 schlägt ein Verfahren zum Auffüllen von Vermessungslücken vor, mit Erfassen von Hauptpunktwolkendaten auf einem vorgegebenen Messbereich durch einen Laserscanner, Erkennen eines Bereichs ohne erfasste Daten, Erfassen von ergänzenden Bilddaten des Bereichs ohne erfasste Daten aus wenigstens zwei Richtungen durch eine zusätzliche Bildaufnahmevorrichtung, Vorbereiten eines stereoskopischen Bildes basierend auf den ergänzenden Bilddaten, die von der zusätzlichen Bildaufnahmevorrichtung erhalten wurden, Erfassen von ergänzenden Punktwolkendaten auf dem Bereich ohne erfasste Daten durch eine Bildmessung basierend auf dem stereoskopischen Bild, Ergänzen des Bereichs der Hauptpunktwolkendaten ohne erfasste Daten durch Abgleichen der Hauptpunktwolkendaten mit den ergänzenden Punktwolkendaten. Das Verfahren ist dabei für das Post-Processing vorgesehen. Eine Vor-Ort-Information bzw. Vorab-Information zu nicht erfassten Bereichen ist damit nicht erhältlich.

Die EP 3 062 066 A1 offenbart ein Verfahren, mit dem vor Ort bzw. vorab geeignete Messpositionen eines vermessenden unbemannten Fluggeräts (UAV) bereitgestellt werden können. Hierzu werden mittels eines terrestrischen Vermessungsgerätes wie einer Totalstation oder einem Laserscanner Referenzpunkte eines Objekts ermittelt, anhand derer einzunehmende Messpositionen für das UAV zur eigentlichen Vermessung des Objekts durch das UAV abgeleitet werden können. Mit diesem recht speziellen und aufwändigen Verfahren kann also vorab eine geeignete Vermessungsflugbahn für ein Vermessungs-UAV ermittelt werden. Für eine verbesserte Vermessung von ermittelt werden. Für eine verbesserte Vermessung von mehreren Standorten aus bzw. einer verbesserten Stationierungsfindung mittels eines terrestrischen Geräts wie ein Laserscanner oder eine Totalstation selbst bietet diese Lehre allerdings keine Hilfe.

Die JP 2018 138883 A lehrt ein Verfahren, bei dem anhand eines virtuellen Modells eines zu vermessenden Objekts, welches aus Bildern des Objekts erstellt ist, für einen nachfolgende Vermessung einzunehmende Vermessungsstandorte berechnet werden. Nachteilig hieran ist u.a., dass damit nur simulierte Standorte bereitgestellt werden und dass der Vermessung ein erheblicher Aufwand vorangehen muss, darunter auch ein Fotografieren des ganzen Objekts durch den Benutzer.

Die US 2017/0123066 A1 offenbart ein laserbasiertes System zur Punktwolkenerstellung mit einer IMU, wobei anhand der Punktwolke Bilder der gescannten Umgebung auf einem Display dem Benutzer angezeigt werden können.

Aufgabe der Erfindung ist es daher, ein Verfahren zur automatischen Unterstützung der Stationierungsfindung eines mobilen bzw. tragbaren terrestrischen opto-elektronischen Koordinatenmessgeräts bereitzustellen.

Insbesondere ist es eine weitere Aufgabe der Erfindung, ein solches Verfahren bereitzustellen, bei welchem sukzessive geeignete oder optimale aufeinanderfolgende Standorte zur Vermessung automatisch ermittelt und ggf. bereitgestellt werden.

Mindestens eine dieser Aufgaben wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Die Erfindung betrifft ein Verfahren zum Ermitteln einer geeigneten oder optimalen Stationierung eines terrestrischen opto-elektronischen Koordinatenmessgeräts innerhalb einer Messumgebung, wobei das Koordinatenmessgerät ausgebildet ist zur messstrahlbasierten Bestimmung von Objektkoordinaten, z.B. ausgebildet als Laserscanner oder Totalstation. Im Rahmen des Verfahrens wird von einer ersten Stationierung aus ein erster Messbereich vermessen. Anschliessend wird das Koordinatenmessgerät von der ersten Stationierung aus für einen Stationierungswechsel fortbewegt und im Rahmen des Stationierungswechsels Messumgebung optisch erfasst. Anhand von derart erfasster Messumgebung wird wenigstens ein Aufgabenbereich ermittelt als Bereich der Messumgebung, welcher zu vermessen ist sowie anhand von derart erfasster Messumgebung wenigstens ein Sichtbereich ermittelt als Bereich der Messumgebung, welcher von einer im Rahmen der Fortbewegung eingenommenen aktuellen Position des Koordinatenmessgeräts aus vermessbar ist bzw. wäre.

Die so bereitgestellten Daten bezüglich Messbereich, Aufgabenbereich und Sichtbereich dienen als Basis für eine zusammenschauende Analyse des ersten Messbereichs, des Aufgabenbereichs und des Sichtbereichs, mittels derer die Position auf Eignung als Stationierung geprüft wird.

Bevorzugt erfolgt die derartige Prüfung im Hinblick auf Eignung als zweite und nächste Stationierung, also im Anschluss an oder in direkter Folge auf die erste Stationierung. Durch das automatische "Live"-Positionsprüfen kann somit sichergestellt werden, dass sukzessive aneinander anschliessende Messbereiche der Messumgebung vermessen werden, ohne dass dazwischen Vermessungslücken entstehen.

Bevorzugt erfolgt das optische Erfassen von Messumgebung während des Fortbewegens kontinuierlich, insbesondere wobei der Aufgabenbereich kontinuierlich anhand der kontinuierlich erfassten Messumgebungsdaten aktualisiert wird und/oder das Prüfen auf Eignung als Stationierung ebenfalls kontinuierlich erfolgt. Mittels kontinuierlicher Prüfung der jeweiligen Position lässt sich vorteilhaft der Positionswechsel durch das Fortbewegen dauernd überwachen, so dass z.B. eine ungeeignete Position sofort festgestellt werden kann bzw. sofort detektiert wird, wenn ein geeigneter Positionierungsbereich verlassen wird.

Bevorzugt erfolgt das optische Erfassen von Messumgebung während des Fortbewegens messstrahlbasiert mittels Profiling und/oder Grob-Scannen (Scan mit einer geringen Auflösung/Punktdichte). Beispielsweise wird das als Laserscanner ausgebildete Gerät während des Positionswechsels in einem Profiler-Modus betrieben, das heisst, es wird nur diejenige Achse bewegt, die parallel zu Lotrichtung ist, sodass der Messstrahl ein Profil der Umgebung (beispielsweise einen Grundriss) aufzeichnet. Alternativ oder zusätzlich erfolgt das optische Erfassen fotografisch mittels Panoramabildaufnahme, Stereofotogrammetrie, Tiefenbildaufnahme, einer Range-Image-Kamera und/oder einer Überblickskamera des Koordinatenmessgeräts.

Optional weist das Gerät zum erleichterten Fortbewegen eine Haltevorrichtung auf, insbesondere einen Griff, der dazu ausgestaltet ist, einem Benutzer das Tragen des Geräts in einer für die Erfassung der Messumgebung vorteilhaften Weise zu ermöglichen, insbesondere wobei die Haltevorrichtung dazu ausgestaltet ist, das Gerät um 90° gekippt zu tragen. Optional weist das Gerät eine Anzeigeeinheit zum Anzeigen eines Kippwinkels auf, wobei die (analoge oder digitale) Anzeigeeinheit insbesondere so positioniert ist, dass sie bei einem Tragen des Geräts in einer um 90° gekippten Position durch einen den Laserscanner tragenden Benutzer ablesbar ist.

Optional beinhaltet die vergleichende Analyse ein Prüfen auf Überlappungen und/oder Lücken von Messbereich, Aufgabenbereich und/oder Sichtbereich, z.B. ein Prüfen auf Überlappungen von Messbereich und Sichtbereich. Als weitere Option beinhaltet die Analyse ein Prüfen auf Lücken zwischen Aufgabenbereich und Sichtbereich.

Im Rahmen dieser Option wird optional das Vorhandensein von Lücken bzw. Überlappungen anhand von Punktkorrespondenzen zwischen den Bereichen ermittelt, insbesondere wobei eine Lücke anhand von Punkten des Aufgabenbereichs ermittelt wird, welche weder im Messbereich noch im Sichtbereich Korrespondenzen haben. Anders gesagt, wird das Vorhandensein bzw. Fehlen korrespondierender Punkte zwischen den Bereichen überprüft.

Dabei werden optional Punktkorrespondenzen basierend auf Punktabständen ermittelt, wobei als weitere Option zusätzlich Normalvektoren von Punkten berücksichtigt werden, und/oder Punktkorrespondenzen werden basierend auf Abgleichen und/oder Verfolgen lokaler Bildmerkmale ermittelt, insbesondere wobei lokale Bildmerkmale durch Deskriptoren beschrieben werden. Alternativ dazu können lokale Bildmerkmale auch durch auf Deep Learning basierende Encodings beschrieben werden.

Optional wird im Rahmen des Verfahrens eine Benutzerwarnung ausgegeben, sobald die Position als für eine Stationierung ungeeignet festgestellt wird bzw. das Prüfergebnis negativ ausfällt. Beispielsweise erfolgt eine Warnung akustisch oder mittels Leuchtanzeige, wenn der aktuelle Sichtbereich eine lückenlose Vermessung nicht (mehr) ermöglicht bzw. entlang eines bereits zurückgelegten Pfads der Fortbewegung nicht vermessene Teile des Aufgabenbereichs zurückbleiben.

In einer Fortbildung des Verfahrens wird basierend auf einem Ergebnis des Prüfens ein für eine Vermessung eines weiteren Messbereichs geeigneter und/oder ungeeigneter Standort und/oder eine geeignete und/oder ungeeignete Standortzone und/oder bestehende oder potentielle Abdeckungslücken des Aufgabenbereichs ermittelt und als Benutzerausgabe bereitgestellt. Es wird also anhand der überprüften Position(en) dem Benutzer eine Information gegeben, welche Position(en) für eine Vermessung, insbesondere an die vorherige Vermessung anschliessende, in Frage kommen oder umgekehrt gerade nicht in Frage kommen. Hierbei sind auch gestufte Einordnungen möglich, also es kann auch der Grad einer Eignung ermittelt und z.B. als Prozentwert ausgegeben werden, so dass beispielsweise eine bedingte Eignung dargestellt ist. Eine derartige Information wird dabei optional mittels einer Karte der Messumgebung grafisch dargestellt, z.B. indem (un-)geeignete Umgebungszonen oder (potentielle) Messlücken oder (potentielle) Stationierungen mit (potentiell) ungenügender Messüberlappung farblich oder durch ein Muster markiert sind.

Im Falle eines automobilen Koordinatenmessgeräts kann ein ermittelter geeigneter Standort auch selbsttätig eingenommen werden. Als weitere Option wird dabei auch eine geeignete Ausrichtung bzw. Orientierung des Vermessungsgeräts ermittelt und ausgegeben und/oder bei Vorhandensein einer entsprechenden Motorisierung automatisch eingenommen.

In einer weiteren Fortbildung des Verfahrens erfolgt ein Ermitteln einer geeigneten Position als optimale zweite, bevorzugt nächste, Stationierung anhand wenigstens eines vorgegebenen Optimierungskriteriums. Als Optimierungskriterium dient beispielsweise ein lückenloser Anschluss eines zweiten oder weiteren Messbereichs an den (ersten) Messbereich bei definiertem, insbesondere definiertminimalem, Überlapp mit dem ersten Messbereich. Der Überlapp ist z.B. derart definiert, dass er (gerade) ausreichend für eine Registrierung der Punktwolken des ersten und zweiten Messbereichs ist, ohne ein unnötiges/redundantes "Zuviel" an Messdaten zu generieren.

Als Optimierungskriterium kommt alternativ oder zusätzlich eine Optimierung der Abfolge des Vermessungsvorgangs in Betracht, z.B. ein Vermessen des gesamten Aufgabenbereichs (der gesamten Messumgebung) bei möglichst wenig Stationierungen, möglichst geringem Zeitaufwand, hoher geometrischer Genauigkeit der Stationierungen zueinander und/oder möglichst geringem Weg zwischen den Stationierungen.

Als weitere Alternative oder weitere Möglichkeit betrifft das Optimierungskriterium einen Auftreffwinkel des Messstrahls auf Objektoberflächen und/oder eine, insbesondere lokale, Auflösung der Koordinatenmessung. Beispielsweise wird dahingehend optimiert eine Position als optimal geeignet ermittelt, von welcher aus besonders relevante Objekte oder Zonen (Regions of Interest) hochauflösend und/oder rauscharm bzw. mit gutem Messsignalpegel vermessen werden können. Beispielsweise werden so Positionen als für eine Stationierung ungeeignet oder wenig geeignet automatisch klassifiziert, welche zwar eine Anvisierung eines Objekts ermöglichen, aber bei Vermessung eine zu geringe Punktdichte oder zu geringe Messpräzision auf einem oder mehreren Objekten oder Zonen ergeben (würden).

Optional erfolgt beispielsweise deshalb im Rahmen des optischen Erfassens von Messumgebung ein Erkennen von Objekten, insbesondere wobei die vergleichende Analyse von Messbereich, Aufgabenbereich und Sichtbereich anhand solcher erkannter Objekte bzw. deren Objektpunkte erfolgt. Als weitere Option erfolgt dabei ein Klassifizieren von Objekten, z.B. hinsichtlich Relevanz für die Vermessung, als beispielsweise eine Klassifizierung in hoch relevant - relevant - irrelevant.

Optional erfolgt ein Filtern im Rahmen des Ermittelns des Aufgabenbereichs von nicht zu vermessenden Objekte und/oder Umgebungsbereichen. Uninteressante Objekte oder Bereiche werden somit also aussortiert und nicht in den Aufgabenbereich übernommen.

Als weitere Option erfolgt das optische Erfassen von Messumgebung unter Verwendung von Simultaneous Localization and Mapping-, LIDAR-Simultaneous Localization and Mapping-, Structure from Motion- und/oder Dense Matching-Algorithmen. Als weitere Option erfolgt das Erfassung unter Verwendung von zusätzlich erfassten Daten wenigstens eines Positions-, Richtungs- und/oder Beschleunigungssensors des Koordinatenmessgeräts.

Die Erfindung betrifft weiter ein Computerprogrammprodukt nach Anspruch 14.

Zudem betrifft die Erfindung ein terrestrisches opto-elektronisches Koordinatenmessgerät nach Anspruch 15.

Das erfindungsgemässe Verfahren ermöglicht also vorteilhaft, vor Ort automatisch Positionen des Vermessungsgeräts auf Eignung als Stationierung zu prüfen. Der Benutzer wird hiermit von der Aufgabe entlastet, selbst Standorte hinsichtlich Eignung zu untersuchen. So kann der Benutzer sich in der Messumgebung mit dem Gerät bewegen, während das Gerät ihn mittels fortlaufender Eignungsprüfung auf geeignete Positionen hinweist bzw. vor ungeeigneten Positionen warnt. Vor allem kann der Benutzer, von einer ersten Stationierung ausgehend, nach und nach die Messumgebung ablaufen, wobei mittels des Verfahrens die jeweils nächste geeignete Stationierung automatisch ermittelt wird, so dass nach und nach die gesamte Messumgebung von aufeinanderfolgenden Stationierungen aus vermessen wird. Beispielsweise nimmt der Benutzer das Vermessungsgerät nach Vermessung von der ersten Stationierung auf, läuft soweit, bis er dank des Verfahrens ein Stoppsignal erhält, stellt an seiner dann erreichten Position oder an der letzten, als geeignet ermittelten Position das Gerät ab, vermisst von dieser zweiten Stationierung aus, nimmt das Gerät wieder auf und lässt sich zur nächsten (dritten) Stationierung lotsen usw.

Besonders vorteilhaft ist, dass im Rahmen des Verfahrens anhand von Optimierungskriterien nicht nur eine geeignete, sondern auch eine optimale Position automatisch gefunden werden kann. Eine solche zu finden erfordert bislang meist einen geübten, erfahrenen Benutzer. Mit dem erfindungsgemässen Verfahren hingegen werden Kriterien wie Auflösung und Auftreffwinkel des Messstrahls auf einer Oberfläche automatisch berücksichtigt, so dass das Vermessen mit in dieser Hinsicht optimalen Parametern erfolgen kann bzw. ungünstig niedrige Auflösungen oder Auftreffwinkel, die zu einer allzu grossen Verschmierung des Messpunkts führen, vermieden werden. Dies wird optional vorteilhaft mit Objekterkennung und Objektklassifizierung verbunden, so dass Optimierungskriterien speziell im Hinblick auf (besonders) relevante Objekte angewandt werden können. Auch kann eine Optimierung vorteilhaft hinsichtlich des Vermessungsablaufs als Ganzes erfolgen, so dass die gesamte Messumgebung optimal vermessen wird, z.B. mit möglichst wenig und dadurch optimale Stationierungen.

Das erfindungsgemässe Verfahren und das erfindungsgemässe Vermessungsgerät werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.

Im Einzelnen illustrieren
- Fig. 1: eine beispielhafte Ausführungsform eines gattungsgemässen terrestrischen opto-elektronischen Koordinatenmessgeräts, ausgebildet als Laserscanner;
- Fig. 2: einen Laserscanner beim Vermessen eines Innenraumes von einer ersten Messposition aus;
- Fig. 3a-e: ein erstes Beispiel für einen erfindungsgemässen Verfahrensablauf;
- Fig. 4a-b: weitere Beispiels für ein erfindungsgemässes automatisches Positionseignungsermittlungsverfahren dargestellt;
- Fig. 5a-b: ein Beispiel für ein Erfassen von Messumgebung zum Stationierungsprüfen dargestellt; und
- Fig. 6a-d: Fortbildungen des erfindungsgemässen Koordinatenmessgeräts 1 bzw. des Verfahrens.

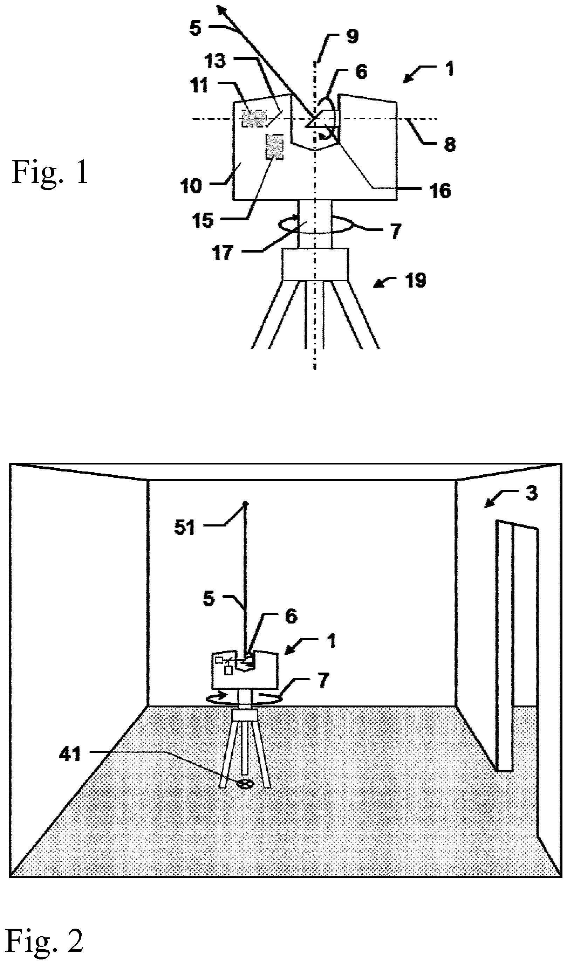

Die Figur 1 zeigt eine beispielhafte Ausführungsform eines gattungsgemässen terrestrischen opto-elektronischen Koordinatenmessgeräts, im Beispiel ausgebildet als Laserscanner 1. Dieser weist ein Oberteil 10 auf, der um eine Stehachse 9 motorisiert drehbar mit einer Basis 17 verbunden ist, die in diesem Beispiel auf einem Stativ 19 angeordnet ist. In dem Oberteil 10 befinden sich der Lichtsender 11 zum Aussenden eines Messstrahls 5 des Laserscanners 1, ein Lichtempfänger 15 zum Empfangen zurückgestrahlter Anteile des Messstrahls 5 sowie ein Strahlteiler 13. Eine Strahllenkeinheit 16, die einen Spiegel aufweist, ist um eine Querachse 8 motorisiert drehbar am Oberteil 10 angebracht. Die Querachse 8 ist orthogonal zur Stehachse 9. Durch eine Drehung 6 der Strahllenkeinheit 16 um die Querachse 8 wird der Messstrahl 5 vertikal über eine Oberfläche geführt, während durch eine Drehung 7 des gesamten Oberteils 10 um die Stehachse 9 der Messstrahl 5 horizontal über die Oberfläche geführt wird.

Eine Steuer- und Auswerteeinheit (hier nicht gezeigt) steht mit dem Lichtsender 11 und dem Lichtempfänger 15 im Oberteil 10 in Datenverbindung, wobei die Steuer- und Auswerteeinheit oder Teile derselben auch ausserhalb des Oberteils 10 angeordnet sein können, beispielsweise als ein an der Basis 17 angeschlossener Computer. Die Steuer- und Auswerteeinheit ist dazu ausgebildet, für eine Vielzahl von Messpunkten die Distanz des Laserscanners 1 zu dem Messobjekt aus der Laufzeit des Messstrahls 5 und dessen zurückgestrahlter Anteile zu ermitteln. Hierzu kann beispielsweise auch die Phasenverschiebung zwischen dem ausgesendetem Messstrahl 5 und der empfangenen Strahlung bestimmt und ausgewertet werden. An die Steuer- und Auswerteeinheit kann eine Anzeigevorrichtung angeschlossen sein (hier nicht dargestellt), die als ein Display direkt am Laserscanner 1, oder als Display eines angeschlossenen Computers ausgestaltet sein kann.

Die hier gezeigte Ausführungsform des Vermessungsgeräts 1 zur Bestimmung von Objektpunktkoordinaten ist rein beispielhaft, und aus dem Stand der Technik sind mögliche Modifikationen bekannt. Ein weiteres Beispiel für ein solches Gerät ist eine Totalstation oder elektronisches Tachymeter, mit welchem Einzelpunktmessungen, z.B. im Rahmen von geodätischen Vermessungen, durchführbar sind.

Figur 2 zeigt die erste Ausführungsform des Laserscanners 1 beim Vermessen einer als Innenraum 3 gestalteten Messumgebung von einer ersten Messposition oder Stationierung 41 aus.

Mittels der (schnellen) Drehung 6 der Strahllenkeinheit werden die Oberflächen der Messumgebung 3 durch den Messstrahl 5 entlang einer vertikalen Kreislinie abgetastet. Mittels der (langsamen) Drehung 7 des Oberteils relativ zur Basis wird mit diesen Kreislinien nach und nach der gesamte Raum abgetastet. Die Gesamtheit der Messpunkte 51 einer solchen Messung wird als Scan bezeichnet und kann beispielsweise eine Punktwolke ergeben.

Jeder Messpunkt 51 kann ausser der ermittelten Distanz zum Laserscanner 1 (bzw. zum Ursprung des Bezugssystems) auch noch einen Helligkeitswert aufweisen, welche ebenfalls von der Steuer- und Auswerteeinheit ermittelt wird. Die Helligkeit ist ein Graustufenwert, der beispielsweise durch Integration des bandpassgefilterten und verstärkten Signals des Lichtempfängers 15 über eine dem Messpunkt 51 zugeordnete Messperiode ermittelt wird.

Optional können mittels einer Farbkamera des Koordinatenmessgeräts 1 zusätzlich auch Bilder erzeugt werden, mittels derer den Messpunkten 51 zusätzlich Farbwerte zugeordnet werden können. Eine solcher Kamera kann beispielsweise als Überblickskamera ausgeführt sein. Zudem sind auch derartige Vermessungsgeräte 1 mit einer oder mehreren Kameras bekannt, mit denen Panoramabilder der Messumgebung 3 aufgenommen werden können.

Mittels des optischen Abtastens und Vermessens der Umgebung des Laserscanners 1 wird jeweils ein Scan eines bestimmten Aufnahmegegenstandes erstellt bzw. allgemeiner formuliert werden Objektpunkte 51 koordinativ vermessen. Es gibt dabei häufig Aufnahmegegenstände bzw. Messumgebungen 3, die sich nicht mit einem einzigen Scan bzw. von einem einzigen Standort 41 aus erfassen lassen, beispielsweise verwinkelte Innenräume oder mehrere Räume eines Gebäudes. Zu deren Vermessung wird ein Benutzer wie anhand der folgenden Figuren beschrieben durch das erfindungsgemässe Verfahren unterstützt, indem automatisch ein Prüfen von Positionen auf Eignung als Stationierung erfolgt.

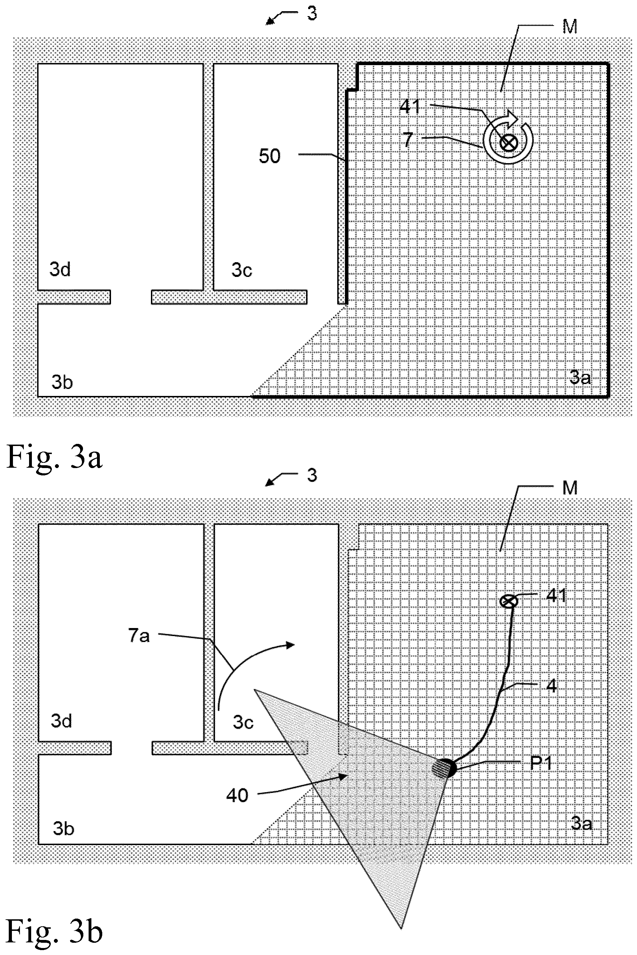

In den Figuren 3a-3e ist als ein beispielhafter Aufnahmegegenstand 3 eine Anordnung mehrerer Räumlichkeiten 3a-3d in Form eines Grundrisses dargestellt. Diese Messumgebung 3 ist vollständig zu vermessen.

Hierfür ist der Laserscanner an verschiedenen Stationierungen aufzustellen, wobei die erste Stationierung 41 in der Figur 3a dargestellt ist. Der gerätefeste Ursprung des Bezugssystems des Laserscanners gelangt so an mehrere verschiedene raumfeste Zentren des Laserscanners. Die verschiedenen Scans sind dann in ein gemeinsames Koordinatensystem einzuordnen, z.B. als sogenannte Registrierung. Für ein solches Registrieren ist eine bestimmte Überlappung der Messbereiche bzw. Punktwolken vorteilhaft oder notwendig.

In Figur 3a ist der Laserscanner an einer ersten Messposition 41 in einem der Zimmer aufgestellt. Durch die schnelle vertikale Drehung der Strahllenkeinheit und die langsame horizontale Drehung 7 des Oberteils relativ zur Basis werden nach und nach die Oberflächen 50, also Wände, Boden und Decke (in der Figur angedeutet durch die dicken schwarzen Linien) des ersten Teils der Messumgebung 3 als erster Messbereich M (grau gerasterte Fläche) abgetastet, wobei als Ergebnis eine erste Punktwolke entstehen kann.

In Figur 3b wird der Laserscanner entlang des Weges 4 von der ersten Messposition 41 aus zum Stationierungswechsel fortbewegt, hin zu einer ersten Position P1. Hierbei wird beispielsweise im Rahmen einer Stationierungsermittlungsfunktionalität des Laserscanners von der ersten Position P1 aus Messumgebung 3 optisch erfasst, im Beispiel durch Aufnehmen 40 eines Panoramabilds oder einer 360°-Rundumfotografie, wozu beispielsweise eine Kamera des Laserscanners durch Drehen des Scanner-Oberteils, symbolisiert durch den Pfeil 7a, verschwenkt wird. Alternativ erfolgt ein solches Erfassen optisch z.B. durch (groben) Lidar-Scan.

Zur einfacheren Darstellung erfolgt im Beispiel ein Erfassen von Messumgebung 3 erst an der Position P1; bevorzugt jedoch wird im Rahmen des Verfahrens kontinuierlich im Rahmen des Stationierungswechsels, entlang des Weges 4, beginnend ab der Messposition 41, Messumgebung erfasst, z.B. durch fortwährendes Fotografieren mit einer bestimmten Aufnahmerate oder fortwährendes Profiling mit dem Laserstrahl des Laserscanners. Auch das im Folgenden beschriebene Auswerten bzw. Analysieren der so erfassten Messumgebungsdaten erfolgt bevorzugt kontinuierlich, so dass eine Vielzahl von Positionen auf Stationierungseignung geprüft wird bzw. fortlaufend die jeweils aktuelle Position auf Eignung überwacht wird.

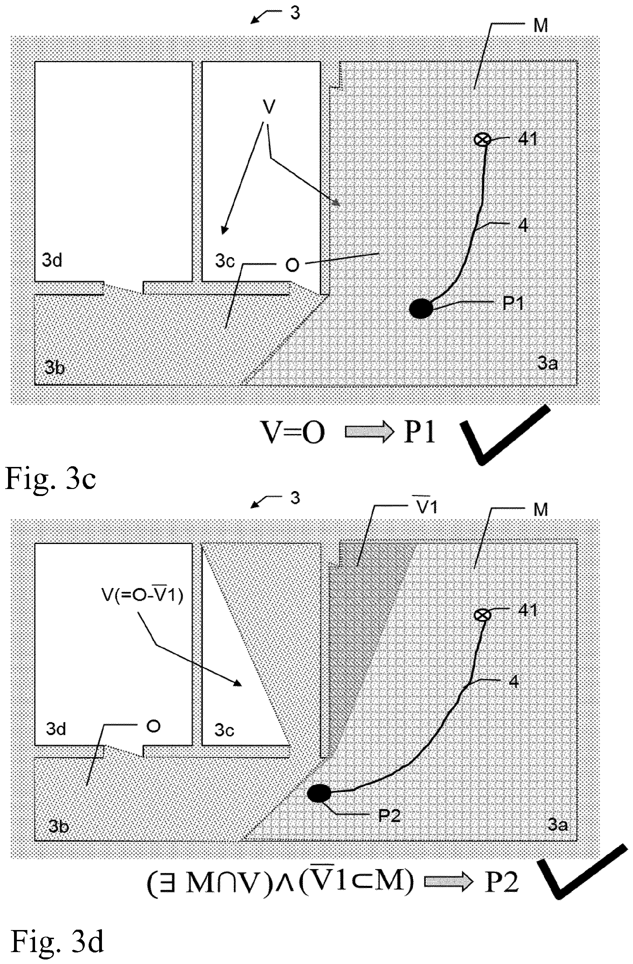

In Figur 3c ist dargestellt, wie nun die erfassten Messumgebungsdaten ausgewertet werden, um die Position P auf Eignung als Stationierung zu prüfen. Anhand der erfassten Messumgebungsdaten wird ein Aufgabenbereich O (punktierte Teilfläche) ermittelt. Als solcher wird ein Umgebungsbereich verstanden, welcher zu vermessen ist, also z.B. gescannt werden soll. Im Beispiel ist dies der bereits gescannte Messbereich M (karierte Teilfläche) sowie der Zugangsbereich 3b zu den beiden kleineren Räumen 3c, 3d Der Messbereich M kann also als Teilbereich oder Teilmenge des Aufgabenbereichs O angesehen werden.

Weiter wird anhand der erfassten Messumgebungsdaten ein Sichtbereich V ermittelt. Unter diesem wird der Teil der Messumgebung verstanden, der von der Position P1 aus sichtbar bzw. vermessbar ist. Im Beispiel sind von der Position P1 aus sowohl der grosse Raum 3a als auch der Zugangsbereich 3b einsehbar bzw. anders gesagt ist der sichtbare Bereich V mit dem Aufgabenbereich O deckungsgleich. Mathematisch ausgedrückt sind Sichtbereich V und Aufgabenbereich O identisch.

Da von der Position P1 aus der Sichtbereich V den (bislang ermittelten) Aufgabenbereich O gänzlich umfasst (oder der Aufgabenbereich O mindestens eine Teilmenge von Sichtbereich V ist), ergibt die Prüfung, dass die gegenwärtige Position P1 des Koordinatenmessgeräts als Stationierung geeignet ist. Das heisst, am vorliegenden Standort kann oder könnte der Laserscanner aufgestellt werden, um weitere Teile der Messumgebung M zu vermessen oder anders gesagt einen weiteren Messbereich zu scannen.

Im Beispiel jedoch setzt der Benutzer bzw. das Gerät ohne Vermessung seine Bewegung fort (Figur 3d) und gelangt zur Position P2. Von dieser Position P2 aus erfolgt ein weiteres Erfassen von Messumgebung 3. Aus den erfassten Umgebungsdaten ergibt sich ein weiterer Aufgabenbereich O oder vielmehr wird wie dargestellt der Aufgabenbereich O aktualisiert (hier: erweitert); er umfasst nun den Zugangsbereich zu den Räumen sowie einen Teil eines der beiden kleinen Räume.

Weiter wird wiederum der Sichtbereich V ermittelt. Im Beispiel ist der Aufgabenbereich O zwar nicht komplett im Sichtbereich V enthalten; ein Teil V̅1̅ des Aufgabenbereichs O ist von der Position P2 aus nicht einsehbar bzw. erfassbar. Jedoch ist dieser von der gegenwärtigen Position P2 aus "unsichtbare" Teil V̅1̅ Bestandteil des Messbereichs M, somit bereits vermessen.

Die die Position P2 prüfende Vergleichsanalyse ergibt also, dass zwar der Aufgabenbereich O nicht vollständig im Sichtbereich V enthalten ist, also ein Teil des Aufgabenbereichs O vom Standort P2 aus nicht einsehbar ist. Dies wird jedoch als unproblematisch eingestuft, da dieser Bereich der Messumgebung bereits gescannt, der nicht einsehbare Bereich V̅1̅ also eine Teilmenge von M ist. Zudem existiert ein (ausreichend grosser) Überlappungsbereich zwischen Sichtbereich V und Messbereich M (im Beispiel nach Figur 3d entspricht der Überlappungsbereich dem gesamten Messbereich reduziert um den "unsichtbaren" Teil V̅1̅ ). Durch diese Schnittmenge kann ein vom Ort P2 aus aufgenommener zweiter Messbereich (mit ausreichender Genauigkeit/Robustheit) an den ersten Messbereich angebunden werden, also z.B. eine zweite 3D-Punktwolke des zweiten Messbereichs in das Koordinatensystem der einer ersten 3D-Punktwolke des ersten Messbereichs M registriert werden.

Somit ist auch die Position P2 als Stationierung geeignet. Ein von dort aus vermessener zweiter Messbereich wird oder würde einen lückenlosen Anschluss mit zudem ausreichendem Überlapp an den ersten Messbereich M garantieren.

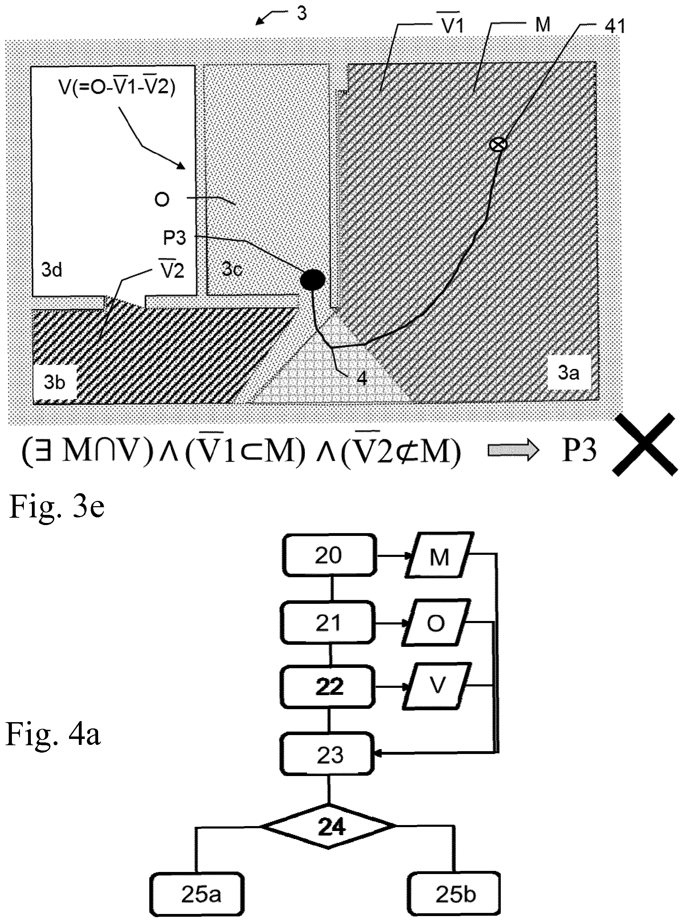

In Figur 3e ist dargestellt, wie das Koordinatenmessgerät seinen Weg 4 fortgesetzt hat und nun in den einen kleinen Raum 3c an die dritte Position P3 gelangt ist. Anhand der optischen -im Beispiel fotografischen- Aufnahme der Messumgebung wird der Aufgabenbereich O aktualisiert. Im Beispiel wird ermittelt, dass die Oberflächen des Raums 3c zur Messaufgabe hinzu kommen und zu scannen sind.

Im Beispiel ist die Überlappungszone zum Messbereich M zwar deutlich geringer als im Beispiel nach Figur 3d (in der Zeichnung das frei sichtbare karierte Dreieck am linken unteren Rand des Messbereichs M), aber der Sichtbereich V gewährleistet immer noch einen ausreichenden Anschluss an den Messbereich M. Somit ist eine Eignungsbedingung auch in der Position P3 erfüllt. Weiter ist wie zuvor (vgl. Figur 3d) der nicht mehr einsehbare Bereich V̅1̅ unproblematisch da bereits vermessen (Teilmenge des ersten Messbereichs M).

Allerdings ergibt die Auswertung der erfassten Messumgebungsdaten, dass von der dritten Position P3 aus der Aufgabenbereich O nicht mehr vollständig vermessbar oder auch nicht bereits vermessen ist. Es gibt einen Teilbereich V̅2̅ des Aufgabenbereichs O, welcher nicht einsehbar ist und nicht Teilmenge des bereits vermessenen Messbereichs M ist. Es liegt also ausgehend von der Position P3 ein Bereich der Messumgebung vor, der noch nicht vermessen ist, aber als zu vermessen erkannt ist, dabei jedoch von der Position P3 aus nicht vermessbar ist.

Es wird also automatisch festgestellt, dass es einen Bereich V̅2̅ der Messumgebung 3 gibt, welcher Teil des Aufgabenbereichs O ist, aber weder Teil des bereits gescannten Messbereichs M noch Teil des Sichtbereichs V ist.

Somit ist eine notwendige Bedingung für Stationierungseignung in der dritten Position P3 nicht gegeben. Die Prüfung fällt somit insgesamt negativ aus, die Position P3 ist ungeeignet (zumindest als nächste Stationierung; wie weiter unten beschrieben, kann das erfindungsgemässe Prüfverfahren noch weiter verfeinert werden, um Abstufungen zwischen den beiden Polen geeignet-ungeeignet zu ermöglichen).

Das Analyseergebnis einer (als nächste Stationierung) ungeeigneten Position P3 wird beispielsweise dem Benutzer, der das Messgerät fortbewegt, angezeigt, z.B. durch eine akustische oder optische Warnung, so dass er entsprechend reagieren kann. Basierend auf einer Analyse von Bereichen, die zu vermessen sind, die bereits vermessen wurden und die von der gegenwärtigen Position aus vermessen werden könnten, werden also gegebenenfalls vorhandene fehlende oder nicht abgedeckte Bereiche automatisch durch das erfindungsgemässe Verfahren ermittelt und z.B. anhand einer grafischen Übersichtsdarstellung/visuellen Karte der Messumgebung an einem Tablet oder dergleichen visualisiert, so dass der Benutzer z.B. während des Ortswechsels zum Einnehmen einer nächsten oder weiteren Stationierung entsprechend informiert werden kann.

Bei einer kontinuierlichen Prüfung der aktuellen Position entlang des Weges 4 wird beispielsweise dem Benutzer eine Information über die Stationierungseignung anhand einer Leuchtanzeige gegeben, z.B. in Form einer LED, die grün leuchtet, solange eine Eignung als Stationierung vorliegt und auf Rot schaltet, sobald die Prüfung ergibt, dass die aktuelle Position ungeeignet für eine Vermessung bzw. als nächste Stationierung ist. Alternativ oder zusätzlich erfolgt eine Ausgabe eines Warntons bei Erreichen eines ungeeigneten Orts.

Alternativ oder zusätzlich erfolgt eine derartige Eignungsprüfung und entsprechend eine optionale Benutzerinformation auch gestuft. Beispielsweise leuchtet eine derartige LED orange auf, wenn die gegenwärtige Position nur bedingt als Stationierung geeignet ist (nicht zwingend oder in jedem Fall ungeeignet).

Bezogen auf das Beispiel nach Figur 3e kann automatisch erkannt werden, dass ein Scannen von der Position P3 aus zwar erst einmal zur Lücke V̅2̅ führt, diese Lücke V̅2̅ jedoch bei weiterer Fortsetzung des Weges 4 und Stationierung an einer weiteren Position entlang der Wegfortsetzung zum/in den Raum 3b geschlossen werden kann (die Lücke V̅2̅ kann also sozusagen zukünftig behoben werden). Die beiden Ordnungskategorien geeignet-ungeeignet werden in einer solchen Fortbildung zusätzlich differenziert in solche Positionen, die als Stationierung geeignet sind, wenn noch (mindestens) eine weitere Stationierung bei Fortsetzung der Vermessung hinzukommt.

Im Gegensatz dazu würde bei einer "rückwärtigen" Lücke, also einer Lücke, die bei Fortsetzung des Wegs 4 offen bleibt, vom Messsystem eine "rote" Warnung ausgegeben; würde beispielsweise der Benutzer den Raum 3c verlassen und in den Raum 3b weitergehen, ohne von der Position P3 aus (den Raum 3c) vermessen zu haben, würde eine solche Warnung ausgegeben, da dann der Raum 3c als Teil des Aufgabenbereichs O unvermessen zurückbleibt. Es wird also geprüft, ob eine Position zu vermessende Umgebungsteile zurücklässt bzw. ab welcher Position eine Messlücke zurückbleibt, welche zukünftig nicht mehr gefüllt werden wird und/oder ab welcher Position kein ausreichender Überlapp zu einem bereits vorhandenen Messbereich M gegeben ist und zukünftig auch nicht mehr hergestellt werden kann.

Bei oben angesprochenen Ausführungsformen mit kartenbasierter Visualisierung der Messumgebung bzw. des Aufgaben-, Sicht- und/oder Messbereichs (z.B. in einer Vogelperspektive) können derartige Warnungen bzw. Benutzerinformationen auch grafisch präsentiert werden. Beispielsweise werden im jeden Fall als Stationierungen geeignete Positionen (oder Positionszonen) grün, fallweise oder nur bedingt geeignete Positionen orange und sicher ungeeignete Positionen rot markiert. Auch können zusätzlich oder stattdessen potentiell problematische Umgebungsbereiche (eventuelle Messlücken) grafisch und z.B. farbblich gestuft angezeigt werden. Anhand einer derartigen Übersichtsdarstellung werden dem Benutzer somit automatisch (besonders) geeignete und/oder potentiell problematische Stellen angezeigt. Eine solche Visualisierung kann somit eine Planungsgrundlage oder eine Art Navigationshilfe darstellen, anhand derer der Benutzer die Vermessung des Aufgabenbereichs O optimal planen kann, z.B. hinsichtlich einer lückenlosen messtechnischen Abdeckung des Aufgabenbereichs O bei möglichst wenigen und/oder sich optimal überlappenden Messbereichen/Stationierungen bzw. einer optimalen Route 4. Derartige Optimierungskriterien können also in einer (von einer derartigen Visualisierung unabhängigen) Weiterbildung des Verfahrens mit berücksichtigt werden, um die Positionsprüfung weiter zu verfeinern. Beispiele für Optimierungskriterien, die vorgegeben werden können, sind das vollständige Vermessen der Messumgebung 3 bei minimalem Zeitaufwand, minimaler Stationierungsanzahl, optimale Scanauflösung (z.B. maximal oder ausreichend hoch) oder hohe geometrische Genauigkeit/Übereinstimmung der Stationierungen zueinander. Bei Berücksichtigung mehrerer solcher Optimierungskriterien können diese sich teilweise widersprechen. In solchen Fällen kann automatisch eine Abwägung erfolgen, so dass in einer Art Kompromiss optimale Positionen automatisch ermittelt werden, die bestmöglich die gewählten Kriterien erfüllen, wobei z.B. auch eine Gewichtung der einzelnen Kriterien vom Benutzer vorgegeben werden kann.

Eine derartige Verfahrensweise erfolgt dabei insbesondere Schritt für Schritt oder dynamisch anpassend, so dass der Benutzer nicht zwingend oder starr einem einmal aufgestellten Plan folgen muss, und entsprechend bei einer Visualisierung diese fortlaufend z.B. an den jeweiligen Ort oder Weg 4 oder jeweils nach Aufnahme eines weiteren Messbereichs aktualisiert wird.

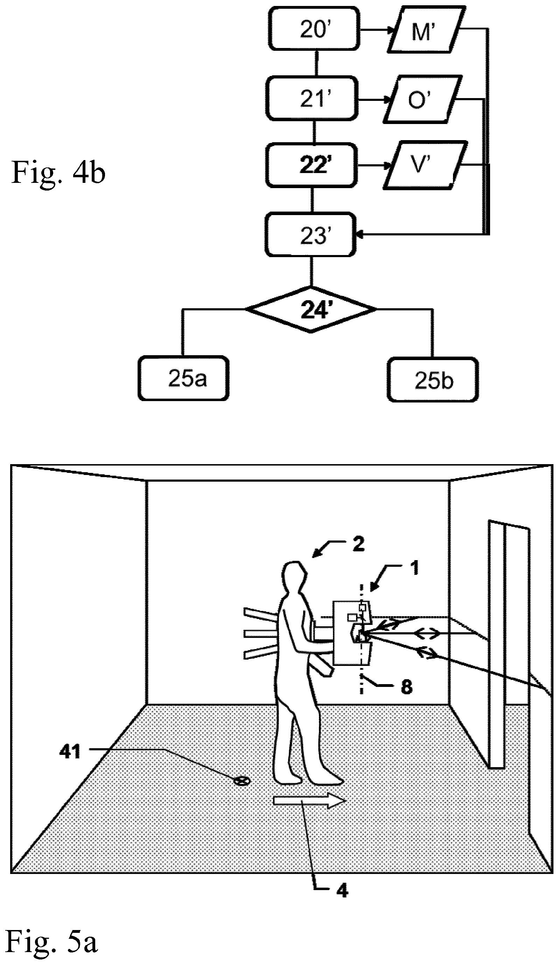

In den Figuren 4a und 4b sind weitere Beispiele für ein erfindungsgemässes Positionseignungsermittlungsverfahren dargestellt.

Nach dem Verfahrensverlauf gemäss Figur 4a wird in einem Schritt 20 in einer ersten Stationierung mittels eines terrestrischen Koordinatenmessgeräts mit einem oder mehreren Scanmitteln zum Scannen von Oberflächen ein erster Objektscan ausgeführt, wodurch als erste Daten ein erster Messbereich M erzeugt wird.

Im Schritt 21 wird das Gerät in der Messumgebung fortbewegt und mit Scanmitteln Bereiche der Messumgebung automatisch erfasst, z.B. Wände, Decken, Böden usw., welche zu vermessen sind. Beispielsweise wird das Erfassen durchgeführt, in dem der Laserstrahl eines Scanmittels um zwei Achsen rotiert (eine schnellere und eine langsamere Drehachse) und mit geringer Auflösung (wesentlich geringerer Auflösung als die Auflösung beim Vermessen) Oberflächen scannt. Dadurch wird ein Aufgabenbereich O generiert, welcher aufgrund des Überstreichens immer neuer Umgebungs-/Objektflächen mit dem Messstrahl kontinuierlich wächst.

Während des Fortbewegens wird zudem im Schritt 22 mit Scanmitteln, die die gleichen sein können -aber nicht müssenwie diejenigen zum Aufgabenbereich erfassen, Bereiche V automatisch erfasst, welche den jeweils sichtbaren Bereich der Messumgebung repräsentieren, also die von der gerade vorliegenden Position aus einsehbaren bzw. vermessbaren Umgebungszone. Beispielsweise ist der Bereich V ein Unter- oder Teilsatz des Aufgabenbereichs O, welcher aus der letzten 180°-Rotation der langsamen Drehachse resultiert.

Anhand der Daten des Messbereichs M, des Aufgabenbereichs O und des Sichtbereichs V wird im Schritt 23 eine automatische zusammenschauende Analyse durchgeführt, wobei Punkte zwischen den Bereichen M, O und V auf Korrespondenz untersucht werden. Dabei wird bei Zuordnung einer Korrespondenz zwischen zwei Punkten, z.B. eines Punktes aus dem Sichtbereich V und eines aus dem Aufgabenbereich O, die Distanz zwischen den Punkten und die Scanauflösung berücksichtigt. Ein Fehlen von Punktkorrespondenz wird beispielsweise dann festgestellt, wenn bei einer Scanauflösung von 20cm sich zu einem Punkt des einen Bereichs M, V oder O kein nächster Punkt innerhalb von 20cm in einem anderen Bereich V, O oder M findet.

Optional können bei der Analyse hinsichtlich Punktkorrespondenzen Normalvektoren zu den jeweiligen Punkten berechnet und berücksichtigt werden. Hierzu erfolgt beispielsweise ein Bestimmen einer Nachbarschaftsmenge, die zueinander benachbarte Objektpunkte eines jeweiligen Bereichs bzw. Grobscans repräsentiert. Benachbarte Objektpunkte sind beispielsweise jeweils zwei Objektpunkte mit dem kleinsten Abstand zueinander, oder alle die Objektpunkte, die zu einem Objektpunkt einen Abstand unterhalb einer gewissen Grenze aufweisen oder eine bestimmte Anzahl von Objektpunkten, die zu einem ausgewählten Objektpunkt den geringsten Abstand aufweisen, also beispielsweise die drei Objektpunkte mit den drei kleinsten Abständen. Basierend auf der Nachbarschaftsmenge werden Objektoberflächen und deren zugehörigen Flächennormalen geschätzt, d.h. eine Art Echtzeitgeometrieerkennung durchgeführt, z.B. indem eine mathematische Ebene durch alle Punkte einer Nachbarschaftsmenge gelegt wird oder durch sonstige Näherungsverfahren. Die Flächenermittlung erfolgt beispielsweise durch Fitten einer Ebene anhand mehrerer Objektpunkte mit dem Fachmann bekannten mathematischen Methoden. Schliesslich wird die Flächennormale der Ebene berechnet. Falls das Schätzen der Oberfläche nicht über Bestimmen einer mathematisch exakten Ebene erfolgt, sondern über eine anderweitige Modellierung erfolgt, ist die Flächennormale beispielsweise ein Mittelwert aus mehreren Einzelflächennormalen. Eine Punktkorrespondenz wird dann angenommen, wenn sowohl der Abstand der Punkte zweier Umgebungsbereiche klein ist (oder unterhalb einer definierten Grenze liegt) und deren Normalvektoren zumindest im Wesentlichen in die gleiche Richtung zeigt. Somit kann z.B. eine fälschliche Zuweisung einer Punktkorrespondenz von Punkten der gegenüberliegenden Seite einer (dünnen) Wand vermieden werden, da diese zwar einen geringen Abstand zueinander haben (in etwa die Wandstärke), aber gegensätzliche Normalvektoren aufweisen.

Anhand des Ergebnisses 24 der Ermittlung von Punktkorrespondenzen wird automatisch festgestellt, ob ausreichend Punktkorrespondenzen vorliegen (25a), also ein Anschluss oder Überlappung von Messbereich M, Aufgabenbereich O und Sichtbereich V in der jeweiligen Geräteposition gegeben ist oder ob Punkte aus dem Aufgabenbereich O vorliegen, welche weder Korrespondenz im Messbereich M noch im Sichtbereich V finden, also ein unabgedeckter Bereich vorliegt (25b). Im ersten Fall (25a) wird die Geräteposition als geeignet für eine Stationierung eingestuft, im zweiten Fall (25b) als ungeeignet.

Figur 4b zeigt einen weiteren Verfahrensverlauf. Gemäss dieses Verfahrensbeispiels wird in einem Schritt 20' in einer ersten Stationierung mittels eines terrestrischen Koordinatenmessgeräts, z.B. einer Totalstation, Einzelpunktmessungen ausgeführt (ein Satz von einzelnen Objektpunkten vermessen), wodurch als erste Daten ein erster Messbereich M' erzeugt wird.

Im Schritt 21' wird das Gerät in der Messumgebung fortbewegt und mit Kameramitteln Bereiche der Messumgebung automatisch erfasst, z.B. Wände, Decken, Böden usw., welche zu vermessen sind. Beispielsweise wird das Erfassen durchgeführt, in dem mit einer Kamera mit grossem Blickfeld und/oder einer Rotation einer Kamera fortlaufend Panoramabilder aufgenommen werden, wobei die Kamera beispielsweise im Gehäuse der Totalstation integriert ist. Dadurch wird ein Aufgabenbereich 0' generiert.

Im Rahmen des Erstellens des Aufgabenbereichs O' wird dabei mittels eines Objekterkennungsalgorithmus, basierend auf Computer-Vision und/oder Machine-Learning, z.B. DeepLearning, Objektpunkte automatisch detektiert, welche für eine Vermessungsaufgabe relevant sind bzw. zu zu vermessenden Objekten gehörig sind, z.B. Hydranten, Gully-Deckel und dergleichen.

Der Aufgabenbereich ist dann von einer Liste von Objektpunkten repräsentiert, z.B. als Feature-Vektoren, welcher fortwährend zunimmt, indem im Laufe der Fortbewegung des Vermessungsgeräts immer neue Objekte im Sichtfeld der Kamera erscheinen und als aufzunehmende Vermessungsobjekte erkannt werden.

Im Schritt 22' wird von einer oder mehrerer Kameras des Vermessungsgeräts, die die gleichen sein können -aber nicht müssen- wie diejenigen zum Aufgabenbereich erfassen, Bereiche V' z.B. mittels Panoramafotografie automatisch erfasst, welche den jeweils sichtbaren Bereich der Messumgebung repräsentieren, also die von der gerade vorliegenden Position aus einsehbaren bzw. vermessbaren Umgebungszone. Auch hier kann in gleicher Weise wie beim Aufgabenbereicherstellen mit Objekterkennung gearbeitet werden. Der Sichtbereich V' ist beispielsweise ein Untersatz des Aufgabenbereichs O', welcher im jeweils aktuellen, zu jetzigen Geräteposition gehörigen Panoramabild detektiert ist.

Anhand der Daten des Messbereichs M', des Aufgabenbereichs O' und des Sichtbereichs V' wird im Schritt 23 eine vergleichende Analyse automatisch durchgeführt, wobei Punkte zwischen den Bereichen M', O' und V' auf Korrespondenz untersucht werden. Dabei erfolgt Zuordnung einer Korrespondenz beispielsweise mittels Feature-Matching oder Feature-Tracking.

Anhand des Ergebnisses 24' der Ermittlung von Punktkorrespondenzen wird automatisch festgestellt, ob ausreichend Punktkorrespondenzen vorliegen (25a), also ein Anschluss oder Überlappung von Messbereich M', Aufgabenbereich O' und Sichtbereich V' in der jeweiligen Geräteposition gegeben ist oder ob Punkte aus dem Aufgabenbereich O' vorliegen, welche weder Korrespondenz im Messbereich M' noch im Sichtbereich V' finden, also ein unabgedeckter Bereich und somit eine als (nächste) Stationierung ungeeignete Position vorliegt (25b).

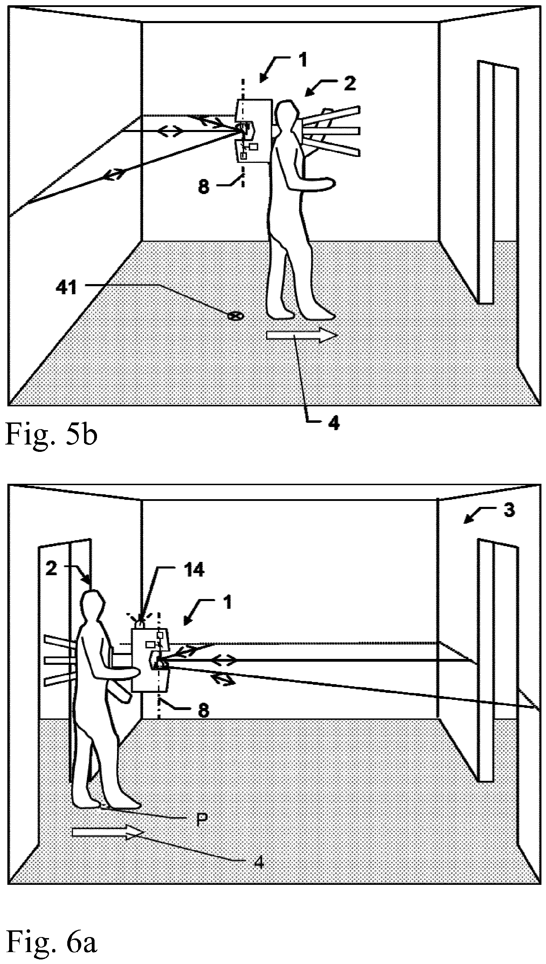

In den Figuren 5a und 5b wird ein Beispiel für ein Erfassen von Messumgebung zum Stationierungsprüfen dargestellt. Nach dem Vermessen der Messumgebung von der ersten Stationierung 41 aus startet ein Benutzer 2 am Laserscanner 1 eine Stationierungsermittlungsfunktionalität und nimmt den Laserscanner 1 an der Basis bzw. am Stativ auf, wobei er den Laserscanner 1 wie dargestellt um etwa 90° kippt, so dass die Querachse 8 (jene Achse, um welche die Strahllenkeinheit gegenüber dem Oberteil drehbar ist) nun im wesentlichen vertikal verläuft bzw. zumindest ungefähr der Richtung der Schwerkraft folgt.

Der Benutzer 2 bewegt dann den Laserscanner 1 in dieser Haltung fort, während der Laserscanner 1 automatisch jeweils die momentan sichtbare/für den Messstrahl zugängliche Messumgebung als Sichtbereich erfasst und den zurückgelegten Weg 4 aufzeichnet. Dies erfolgt in einem Profiler-Modus des Laserscanners 1. Dieser ist dadurch gekennzeichnet, dass die langsame Drehung des Oberteils um die Basis abgestellt ist, und somit nur in einer Ebene Messpunkte vermessen werden. Durch die Kippung des Laserscanners 1 durch den Benutzer um 90° ist so mittels SLAM (simultaneous localization and mapping), bzw. Lidar-SLAM, ein Profil der auf dem Weg 4 zurückgelegten Umgebung erfassbar, d. h. insbesondere ein Grundriss aufzeichenbar, aus dem sich zu vermessende Messumgebungsstellen (Aufgabenbereiche) ableiten lassen. Mit dieser Anordnung kann also z.B. ein waagerechtes Profil des Raumes (Grundriss) als Aufgabenbereich aufgenommen werden, welches durch die Fortbewegung des Scanners im Raum stetig erweitert wird. Für Scan-Aufgaben sind solche Messumgebungsstellen z.B. Wände, Decken, Böden, Gebäude, Vegetation etc. Für Einzelpunktvermessungsaufgaben, z.B. im Rahmen geodätischer Vermessungen, sind Aufgabenstellen ein Satz zu vermessender Oberflächenpunkte wie Ecken eines Hauses, der Mittelpunkt eines Gullydeckels usw.

Vorzugsweise sind Mittel zur Stabilisierung des Scanners 1 im Profiler-Modus vorhanden, um die Scanebene während der Fortbewegung möglichst horizontal zu halten. Die waagerechte Orientierung des Scanners 1 kann dabei sowohl mittels aktiver als auch passiver Stabilisation optimiert werden.

Als Mittel zur passiven Stabilisation kommt beispielsweise eine Gestaltung des Oberteils in Frage, bei der ein Schwerpunkt des Oberteils so gewählt wird, dass die Querachse 8 sich von selbst in die Senkrechte bewegt, wenn der Oberteil wie dargestellt um etwa 90° gekippt wird. Um dies zu gewährleisten, muss eine freie Drehbarkeit des Oberteils um die Stehachse gewährleistet sein.

Zur aktiven Stabilisation kann die Querachse 8 im Rahmen der Positionsprüfungsfunktionalität auch automatisch in Richtung der Schwerkraft drehbar sein, insbesondere durch eine motorisierte Drehung des Oberteils gegenüber der Basis. Zum Ermitteln der Richtung der Schwerkraft kann der Laserscanner 1 über eine oder mehrere Inertialmesseinheiten (IMU) verfügen, wovon vorzugsweise mindestens eine im Oberteil untergebracht ist. Mit Hilfe einer Inertialmesseinheit im Oberteil können Neigungen der Profiler-Ebene zur Waagerechten kompensiert werden. Es ist beispielsweise im Oberteil eine Inertialmesseinheit vorgesehen, die dazu ausgestaltet ist, eine Neigung der Querachse relativ zur Richtung der Schwerkraft zu ermitteln. Der Laserscanner ist dabei vorzugsweise dazu ausgestaltet - in Abhängigkeit von der ermittelten Neigung - den Oberteil gegenüber der Basis motorisiert so um die Stehachse oder gegenüber einer Haltevorrichtung so um eine stabilisierte Achse zu drehen, dass die Neigung der Querachse relativ zur Richtung der Schwerkraft minimiert wird. Eine IMU oder vergleichbare Sensoren, z.B. ein Kompass, können alternativ oder zusätzlich zur Unterstützung der Wegaufzeichnung oder als Alternative zur Verwendung von SLAM eingesetzt werden.

Optional werden (im Vergleich zum eigentlichen Vermessen der Messumgebung) sowohl die Messrate als auch die Drehzahl der Rotationsachse verringert, um Strom zu sparen. Zum Beispiel werden mit einer verringerten oder groben Punktdichte von 10cm (bezogen auf einen Objektabstand von einigen Metern, z.B. 5m) Oberflächen abgetastet.

Optional kann der Scanner beim Profiling auch um die Stehachse oszillieren oder rotieren. Statt einer Ebene des Raums wird dann ein Segment (bzw. der gesamte Raum) gescannt und kann für ein Mobile-Mapping verwendet werden. Bei einer leichten Oszillation der Stehachse (beispielsweise um etwa ± 5°) wird so ein Teil der Seitenwände im Raum gescannt. Bei Höhenänderungen des Geräts ist so immer noch genug Überlappungsbereich vorhanden.

Als Alternative zu solchen messstrahlbasierten Mitteln zum Erfassen von Messumgebung und Ableiten eines Aufgabenbereichs und/oder Sichtbereichs sind diese Mittel wie bereits erwähnt als Kamera ausgebildet, z.B. als Panoramakamera, Tiefenkamera, Stereokamera, RIM-Kamera oder dergleichen. Eine Panorama- oder Rundumkamera ist neben einem Scanner ein bevorzugtes Mittel zur Ermittlung des Sichtbereichs. Die Kamera-Alternativen kommen besonders bei Vermessungsgeräten wie Totalstationen zum Einsatz, welche zur Einzelpunktvermessung vorgesehen sind.

Bevorzugt bzw. wenn sowohl Kamera als auch Profiler-/Scaneinheit vorhanden sind, werden sowohl derartige Kameramittel als auch Messstrahlmittel zur Aufgabenbereicherstellung eingesetzt.

Optional kommen bei der Messumgebungserfassung bzw. der Aufgabenbereichermittlung Objekterkennungsalgorithmen zum Einsatz. Mitters Objekterkennung werden Objekte, z.B. Objekte von besonderem Interesse, wie Türen, Fenster, Gebäude etc. erkannt, wobei optional die Objekterkennung auf Maschinellem Lernen basiert. Dabei können auch Objekte klassifiziert werden, welche erkannt sind, aber nicht zu vermessen sind, z.B. weil sie nicht dauerhafter Bestandteil der Messumgebung sind (beispielsweise Fahrzeuge) oder von geringem Interesse sind. Diese Objekte werden dann nicht als Teil des Aufgabenbereichs übernommen. Ein derartiger Objektfilter kann unnötig grosse Aufgabenbereiche verhindern.

In Verbindung mit fotografischem Erfassen von Messumgebung kommen als weitere Option Algorithmen wie Structure-From-Motion (SfM), SLAM oder Dense Matching, optional basierend auf DeepLearning Algorithmen, zum Einsatz. So wird beispielsweise eine zu vermessende Objekte repräsentierende Punktwolke erzeugt aus den Daten der Bilder, die während der Fortbewegung entlang des Wegs 4 aufgenommen werden.

Optional kann der Laserscanner 1 automatisch in den Positionsprüfungsmodus wechseln - entweder direkt nach Beendigung des Scans der ersten Messumgebung, oder wenn z. B. ein Hochheben oder Kippen durch den Benutzer 2 detektiert wird. Ebenso kann der Laserscanner 1 optional den Positionsüberwachungsmodus automatisch verlassen, wenn detektiert wird, dass er an einer potentiellen bzw. geeigneten Messposition abgestellt wird.

In den Figuren 6a-d sind Fortbildungen des erfindungsgemässen Koordinatenmessgeräts 1 bzw. des Verfahrens gezeigt.

In Figur 6a ist dargestellt, wie bei einer kontinuierlichen Prüfung der aktuellen Position entlang des Weges 4 beispielsweise dem Benutzer eine Information über die Stationierungseignung anhand einer Leuchtanzeige 14 gegeben wird, z.B. in Form einer LED, die grün leuchtet, solange eine Eignung als Stationierung vorliegt und auf Rot schaltet, sobald die Prüfung ergibt, dass die aktuelle Position P ungeeignet für eine Vermessung bzw. als nächste Stationierung ist. Alternativ oder zusätzlich erfolgt eine Ausgabe eines Warntons bei Erreichen eines ungeeigneten Orts.

Beispielsweise wird über eine fortlaufende Analyse des stetig aktualisierten Grundrisses während der Bewegung entlang des Weges 4 detektiert, ob die freie Sicht zum letzten Messbereich und/oder Aufgabenbereich behindert wird, beispielsweise wenn der Laserscanner 1 wie in Figur 5 gezeigt einen Raum verlässt.

In diesem Fall kann der Benutzer 2 beispielsweise zu einem neuen stationären Scan von einer als geeignet ermittelten Position aufgefordert werden. Ebenso kann der Benutzer eine Warnung erhalten, falls er eine bestimmte Entfernung zur letzten Stationierung oder zum letzten Messbereich überschreitet. Wie in Figur 5 dargestellt, kann der Laserscanner 1 zu diesem Zweck mittels der Ausgabeeinheit 14 dem Benutzer 2 optische oder akustische Signale ausgeben, beispielsweise auch um ihn zu einer bestimmten Handlung aufzufordern, z.B. zum Zurückgehen zur letzten geeigneten Position unter Angabe der Richtung und Distanz oder Anzeige dieser anzustrebenden Stationierung auf einer Darstellung des ermittelten Grundrisses. Die Ausgabeeinheit 14 kann beispielsweise ein Anzeigefeld zur Ausgabe von Textnachrichten oder Grafiken (z.B. Grundriss) aufweisen. Auch kann dem Benutzer beispielsweise angezeigt werden, wenn der Oberteil 10 gedreht werden muss.

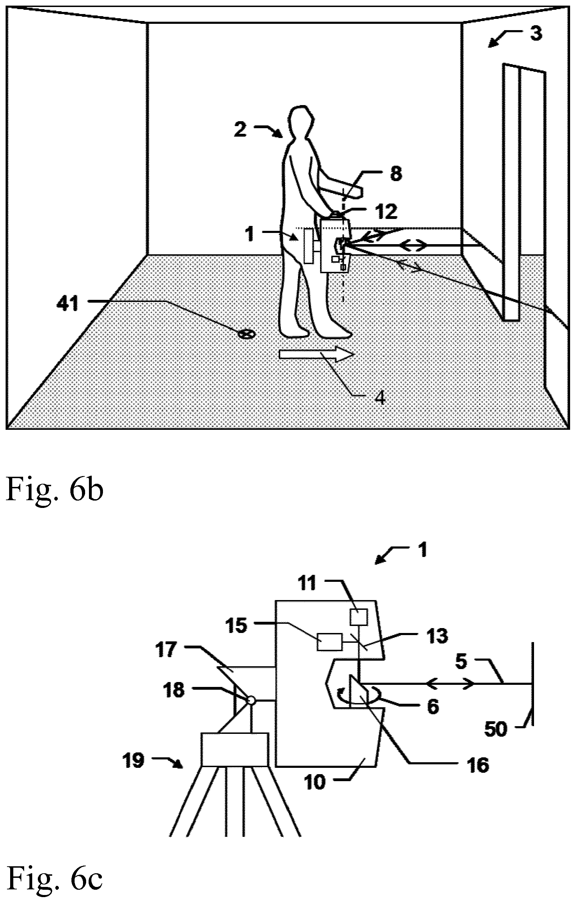

Figur 6b zeigt einen Positionswechsel mit einer weiteren beispielhaften Ausführungsform des Laserscanners 1. Hierbei handelt es sich um einen handgetragenen Laserscanner 1, der zum Tragen durch den Benutzer 2 einen (z. B. henkelförmigen) Griff 12 aufweist. Dieser ist vorteilhaft so am Oberteil angebracht, dass der Laserscanner 1 um 90° gekippt tragbar ist, und das Profiling im Rahmen des Positionstestverfahrens ausführbar ist. Vorzugsweise kann ein solcher Griff 12 ein stabilisiertes Zwei-Achs-Kardangelenk aufweisen, um die Querachse 8 automatisch zur Richtung der Schwerkraft auszurichten, wenn der Laserscanner 1 an dem Griff 12 gehalten wird. Alternativ kann der Laserscanner 1 auch ein Drehgelenk im Griff 12 aufweisen und eine aktive Nivellierung durch die Stehachse.

Figur 6c zeigt eine weitere beispielhafte Ausführungsform des Laserscanners 1. Diese weist Mittel zum Kippen des Oberteils 10 um 90° auf. Diese sind in diesem Beispiel als ein in der Basis 17 angebrachtes Scharnier 18 ausgestaltet. Durch das Kippen des Oberteils 10 kann so das Kippen des gesamten Laserscanners 1 durch einen Benutzer entfallen, was insbesondere bei großen und schweren Scannern von Vorteil sein kann.

Das Scharnier 18 kann entweder durch einen Benutzer bedienbar sein - insbesondere kann dann das Kippen den Laserscanner 1 in den Profiler-Modus versetzen - oder den Oberteil 10 automatisch kippen, insbesondere motorisiert.

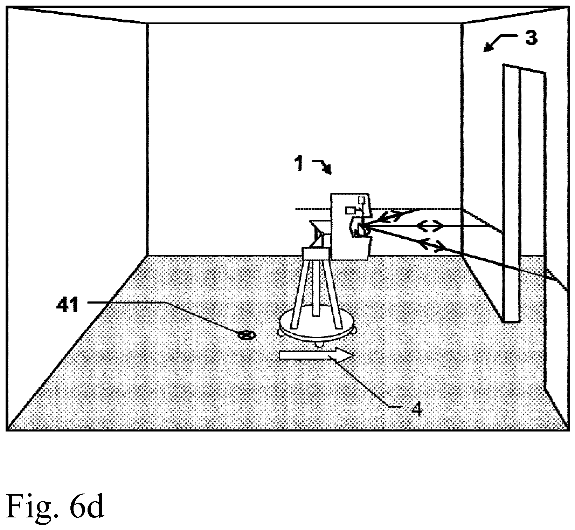

Wie in Figur 6d dargestellt, kann diese Ausführungsform des Laserscanners 1 vorzugsweise verfahrbar gestaltet sein, d. h. insbesondere Räder oder Rollen aufweisen oder auf ein entsprechendes Gestell stellbar sein.

Optional verfügt das Messgerät 1 auch über eine gesteuerte Motorisierung derart, dass eine zuvor ermittelte geeignete Position und/oder Ausrichtung des Geräts 1 vom Gerät 1 selbst automatisch eingenommen werden kann.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

## Patentansprüche

1. Verfahren zum Ermitteln einer geeigneten Stationierung eines terrestrischen opto-elektronischen Koordinatenmessgeräts (1) innerhalb einer Messumgebung (3, 3a-3d), wobei das Koordinatenmessgerät (1) ausgebildet ist zur messstrahlbasierten Bestimmung von Objektkoordinaten wobei
- von einer ersten Stationierung (41) aus ein Messbereich (M, M') vermessen wird (20, 20'),
- das Koordinatenmessgerät (1) von der ersten Stationierung (41) aus für einen Stationierungswechsel fortbewegt wird,
- im Rahmen des Stationierungswechsels die Messumgebung (3, 3a-3d) automatisch optisch erfasst wird (40),
- anhand der derart erfassten Messumgebung (3, 3a-3d) automatisch wenigstens ein Aufgabenbereich (O, O') ermittelt wird als Bereich der Messumgebung (3, 3a-3d), welcher zu vermessen ist (21, 21'),
- anhand der derart erfassten Messumgebung (3, 3a-3d) automatisch wenigstens ein Sichtbereich (V, V') ermittelt wird als Bereich der Messumgebung (3, 3a-3d), welcher von einer im Rahmen der Fortbewegung eingenommenen Position (P1-P3) des Koordinatenmessgeräts (1) aus vermessbar ist (22, 22'), und
- basierend auf einer automatischen zusammenschauenden Analyse (23, 23') des Messbereichs (M, M'), des Aufgabenbereichs (O, O') und des Sichtbereichs (V, V') die Position (P1-P3) auf Eignung als, insbesondere zweite und nächste, Stationierung geprüft wird.

2. Verfahren nach Anspruch 1,
**dadurch gekennzeichnet, dass**
das optische Erfassen (40) der Messumgebung (3, 3a-3d) kontinuierlich erfolgt, wobei
- der Aufgabenbereich (O, O') kontinuierlich anhand der kontinuierlich erfassten Messumgebung (3, 3a-3d) aktualisiert wird und/oder
- das Prüfen auf Eignung als Stationierung ebenfalls kontinuierlich erfolgt.

3. Verfahren nach Anspruch 1 oder 2,
**dadurch gekennzeichnet, dass**
das optische Erfassen (40) der Messumgebung (3, 3a-3d)
- messstrahlbasiert mittels Profiling und/oder Grob-Scannen und/oder
- fotografisch mittels Panoramabildaufnahme, Stereofotogrammetrie, Tiefenbildaufnahme, einer Range-Image-Kamera und/oder einer Überblickskamera des Koordinatenmessgeräts (1)
erfolgt.

4. Verfahren nach einem der vorherigen Ansprüche,
**dadurch gekennzeichnet, dass**
- die automatisch zusammenschauende Analyse (23, 23') ein Prüfen auf Überlappungen und/oder Lücken von Messbereich (M, M'), Aufgabenbereich (O, O') und/oder Sichtbereich (V, V') beinhaltet.

5. Verfahren nach Anspruch 4,
**dadurch gekennzeichnet, dass**
das Vorhandensein von Lücken bzw. Überlappungen anhand von Punktkorrespondenzen zwischen den Bereichen (M, M', O, O', V, V') ermittelt wird, wobei
- eine Lücke anhand von Punkten des Aufgabenbereichs (O, O') ermittelt wird, welche keine Korrespondenzen im Sichtbereich haben (V, V'), und/oder
- Punktkorrespondenzen basierend auf Punktabständen ermittelt werden, und/oder
- Punktkorrespondenzen basierend auf Abgleichen und/oder Verfolgen lokaler Bildmerkmale ermittelt werden.

6. Verfahren nach einem der vorherigen Ansprüche,
**dadurch gekennzeichnet, dass**
im Rahmen des Verfahrens eine Benutzerwarnung ausgegeben wird, sobald die Position (P3) als für eine Stationierung ungeeignet festgestellt wird (25b).

7. Verfahren nach einem der vorherigen Ansprüche,
**dadurch gekennzeichnet, dass**
im Rahmen des Verfahrens basierend auf einem Ergebnis (24) des Prüfens ein für eine Vermessung eines weiteren Messbereichs
- geeigneter und/oder ungeeigneter Standort (P1-P3) und/oder Standortzone
- und/oder bestehende oder potentielle Abdeckungslücken des Aufgabenbereichs (O, O')
ermittelt und als Benutzerausgabe bereitgestellt wird.

8. Verfahren nach einem der vorherigen Ansprüche,
**dadurch gekennzeichnet, dass**
weiter ein Ermitteln einer geeigneten Position (P1-P3) als optimale Stationierung erfolgt anhand wenigstens eines vorgegebenen Optimierungskriteriums.

9. Verfahren nach Anspruch 8,
**dadurch gekennzeichnet, dass**
das Optimierungskriterium
- einen lückenlosen Anschluss eines weiteren Messbereichs an den ersten Messbereich (M, M') bei definiertem Überlapp mit dem ersten Messbereich (M, M') und/oder
- ein Vermessen des Aufgabenbereichs (O, O') bei möglichst
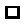 wenig Stationierungen und/oder
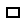 geringem Zeitaufwand und/oder
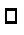 geringem Weg (4) zwischen den Stationierungen und/oder
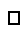 hoher geometrischer Genauigkeit der Stationierungen zueinander
betrifft.

10. Verfahren nach Anspruch 8 oder 9,
**dadurch gekennzeichnet, dass**
das Optimierungskriterium
- einen Auftreffwinkel des Messstrahls (5) auf Objektoberflächen (50) und/oder
- eine Auflösung der Koordinatenmessung
betrifft.

11. Verfahren nach einem der vorherigen Ansprüche,
**dadurch gekennzeichnet, dass**
im Rahmen
- des optischen Erfassens der Messumgebung (3, 3a-3d) ein Erkennen von Objekten und/oder
- des Ermittelns des Aufgabenbereichs (O, O') ein Ausfiltern von nicht zu vermessenden Objekten und/oder Umgebungsbereichen
erfolgt.

12. Verfahren nach einem der vorherigen Ansprüche,
**dadurch gekennzeichnet, dass**
bei Vorliegen eines automobilen Koordinatenmessgeräts (1) die Fortbewegung und ein Vermessen eines weiteren Messbereichs von einer als weitere Stationierung geeignet ermittelten Position (P1, P2) aus automatisch erfolgen.

13. Verfahren nach einem der vorherigen Ansprüche,
**dadurch gekennzeichnet, dass**
das optische Erfassen der Messumgebung (3, 3a-3d) unter Verwendung von
- Simultaneous Localization and Mapping-, LIDAR-Simultaneous Localization and Mapping-, Structure from Motion- und/oder Dense Matching-Algorithmen, insbesondere basierend auf DeepLearning, und/oder
- zusätzlich erfassten Daten wenigstens eines Positions-, Richtungs- und/oder Beschleunigungssensors des Koordinatenmessgeräts (1) erfolgt.

14. Computerprogrammprodukt mit Programmcode, der auf einer als
Steuer- und Auswerteeinheit ausgestalteten elektronischen Datenverarbeitungseinheit eines terrestrischen opto-elektronischen Koordinatenmessgeräts (1) gespeichert ist, zur Ausführung mindestens der folgenden Schritte des Verfahrens nach Anspruch 1:
- automatisches optisches Erfassen (40) einer Messumgebung (3, 3a-3d) im Rahmen eines Stationierungswechsels des Koordinatenmessgeräts (1),
- Ermitteln (21, 21') anhand der derart erfassten Messumgebung (3, 3a-3d) wenigstens eines Aufgabenbereichs (O, O') als Bereich der Messumgebung (3, 3a-3d), welcher zu vermessen ist,
- Ermitteln (22, 22') anhand der derart erfassten Messumgebung (3, 3a-3d) wenigstens eines Sichtbereichs (V, V') als Bereich der Messumgebung (3, 3a-3d), welcher von einer im Rahmen der Fortbewegung eingenommenen Position (P1-P3) des Koordinatenmessgeräts (1) aus vermessbar ist, und
- Prüfen basierend auf einer zusammenschauenden Analyse (23, 23') eines von einer ersten Stationierung (41) aus vermessenen Messbereichs (M, M'), des Aufgabenbereichs (O, O') und des Sichtbereichs (V, V') der Position (P1-P3) auf Eignung als Stationierung.

15. Terrestrisches opto-elektronisches Koordinatenmessgerät (1), ausgebildet zur messstrahlbasierten Bestimmung von Objektkoordinaten,
**dadurch gekennzeichnet, dass**
das Koordinatenmessgerät (1)
- eine oder mehrere optische Einheiten, ausgebildet zur Erfassung einer Messumgebung (3, 3a-3d) und
- eine Stationierungsprüfungsfunktionalität aufweist,
wobei bei Ausführung der Stationierungsprüfungsfunktionalität automatisch erfolgen:
- ein Bereitstellen eines Messbereichs (M, M') als bereits von einer ersten Stationierung (41) aus vermessener Bereich der Messumgebung (3, 3a-3d),
- ein automatisches optisches Erfassen (40) der Messumgebung (3, 3a-3d) mittels der einen oder mehreren optischen Einheiten im Rahmen eines Stationierungswechsels des Koordinatenmessgeräts (1) in der Messumgebung (3, 3a-3d),
- ein Ermitteln (21, 21') anhand der derart erfassten Messumgebung (3, 3a-3d) wenigstens eines Aufgabenbereichs (O, O') als Bereich der Messumgebung (3, 3a-3d), welcher zu vermessen ist,
- ein Ermitteln (22, 22') anhand der derart erfassten Messumgebung (3, 3a-3d) wenigstens eines Sichtbereichs (V, V') als Bereich der Messumgebung (3, 3a-3d), welcher von einer im Rahmen der Fortbewegung eingenommenen Position des Koordinatenmessgeräts (1) aus vermessbar ist, und
- ein Prüfen basierend auf einer zusammenschauenden Analyse (23, 23') des Messbereichs (M, M'), des Aufgabenbereichs (O, O') und des Sichtbereichs (V, V') der Position (P1-P3) auf Eignung als Stationierung.

## Claims

1. Method for ascertaining a suitable deployment of a terrestrial optoelectronic coordinate measuring device (1) within measurement surroundings (3, 3a-3d), wherein the coordinate measuring device (1) is embodied for a measuring beam-based determination of object coordinates, wherein
- a measurement region (M, M') is surveyed (20, 20') from a first deployment (41),
- the coordinate measuring device (1) is moved away from the first deployment (41) for the purposes of changing the deployment,
- measurement surroundings (3, 3a-3d) are automatically optically captured (40) within the scope of changing the deployment,
- at least one task region (O, O'), as a region of the measurement surroundings (3, 3a-3d) to be surveyed (21, 21'), is ascertained automatically on the basis of the measurement surroundings (3, 3a-3d) captured thus,
- at least one visual range (V, V'), as a region of the measurement surroundings (3, 3a-3d) surveyable (22, 22') from a position (P1-P3) of the coordinate measuring device (1) adopted within the scope of the movement, is ascertained automatically on the basis of the measurement surroundings (3, 3a-3d) captured thus,
- the position (P1-P3) is checked for the suitability thereof for a deployment, in particular for a second and next deployment, on the basis of an automatic combined analysis (23, 23') of the measurement region (M, M'), the task region (O, O') and the visual range (V, V').

2. Method according to Claim 1,
**characterized in that**
the optical capture (40) of the measurement surroundings (3, 3a-3d) is implemented continuously, wherein
- the task region (O, O') is updated continuously on the basis of the continuously captured measurement surroundings (3, 3a-3d) and/or
- the check for the suitability for a deployment is likewise implemented continuously.

3. Method according to Claim 1 or 2,
**characterized in that**
the optical capture (40) of the measurement surroundings (3, 3a-3d) is implemented
- measuring beam-based by means of profiling and/or coarse scanning and/or
- photographically by means of a panoramic image recording, stereo-photogrammetry, a depth image recording, a range image camera and/or an overview camera of the coordinate measuring device (1).

4. Method according to any one of the preceding claims, **characterized in that**
the automatic combined analysis (23, 23') contains checking for overlaps of, and/or gaps in, the measurement region (M, M'), task region (O, O') and/or visual range (V, V').

5. Method according to Claim 4,
**characterized in that**
the presence of gaps or overlaps is ascertained on the basis of point correspondences between the regions/ranges (M, M', O, O', V, V'), wherein
- a gap is ascertained on the basis of points in the task region (O, O') that have no correspondences in the visual range (V, V') and/or
- point correspondences are ascertained on the basis of point spacings, and/or
- point correspondences are ascertained on the basis of a comparison and/or a tracking of local image features.

6. Method according to any one of the preceding claims, **characterized in that**
a user warning is output within the scope of the method as soon as the position (P3) is determined as being unsuitable (25b) for a deployment.

7. Method according to any one of the preceding claims, **characterized in that**,
within the scope of the method and on the basis of a result (24) of the check,
- a suitable and/or unsuitable location (P1-P3) and/or location zone for surveying a further measurement region
- and/or existing or potential coverage gaps in the task region (O, O')
are established and provided as user output.

8. Method according to any one of the preceding claims, **characterized in that**
ascertaining a suitable position (P1-P3) for an optimal deployment is further implemented on the basis of at least one specified optimization criterion.

9. Method according to Claim 8, **characterized in that**
the optimization criterion relates to
- gap-free joining of a further measurement region to the first measurement region (M, M') with a defined overlap with said first measurement region (M, M') and/or
- surveying the task region (O, O') with
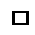 as few deployments as possible and/or
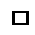 as little time expenditure as possible and/or
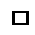 the shortest possible path (4) between the deployments and/or
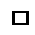 the greatest possible geometric accuracy of the deployments with respect to one another.

10. Method according to Claim 8 or 9,
**characterized in that**
the optimization criterion relates to
- an angle of incidence of the measuring beam (5) on object surfaces (50) and/or
- a resolution of the coordinate measurement.

11. Method according to any one of the preceding claims, **characterized in that**
within the scope of
- the optical capture of measurement surroundings (3, 3a-3d), there is identification of objects, and/or
- the ascertainment of the task region (O, O'), there is filtering of objects and/or regions of the surroundings that should not be surveyed.

12. Method according to any one of the preceding claims, **characterized in that**
the movement and the surveying of a further measurement region from a position (P1, P2) ascertained as suitable for a further deployment are implemented automatically should an independently mobile coordinate measuring device (1) be present.

13. Method according to any one of the preceding claims, **characterized in that**
the optical capture of measurement surroundings (3, 3a-3d) is implemented using
- simultaneous localization and mapping, LIDAR-simultaneous localization and mapping, structure from motion and/or dense matching algorithms, more particularly based on deep learning, and/or
- additionally captured data from at least one position, direction and/or acceleration sensor of the coordinate measuring device (1).

14. Computer program product having program code stored on an electronic data processing unit, configured as a control and evaluation unit of a terrestrial optoelectronic coordinate measuring device (1), for carrying out at least the following steps of the method according to Claim 1:
- automatically optically capturing (40) measurement surroundings (3, 3a-3d) within the scope of changing the deployment of the coordinate measuring device (1),
- ascertaining (21, 21') at least one task region (O, O'), as a region of the measurement surroundings (3, 3a-3d) to be surveyed, on the basis of the measurement surroundings (3, 3a-3d) captured thus,
- ascertaining (22, 22') at least one visual range (V, V'), as a region of the measurement surroundings (3, 3a-3d) surveyable from a position (P1-P3) of the coordinate measuring device (1) adopted within the scope of the movement, on the basis of the measurement surroundings (3, 3a-3d) captured thus,
- checking the position (P1-P3) for the suitability thereof for a deployment on the basis of a combined analysis (23, 23') of a measurement region (M, M') surveyed from a first deployment (41), the task region (O, O') and the visual range (V, V').

15. Terrestrial optoelectronic coordinate measuring device (1) embodied for measuring beam-based determination of object coordinates,
**characterized in that**
the coordinate measuring device (1) comprises
- one or more optical units, embodied to capture measurement surroundings (3, 3a-3d) and
- a deployment checking functionality,
wherein the following is implemented automatically when carrying out the deployment checking functionality:
- providing a measurement region (M, M') as an already surveyed region of the measurement surroundings (3, 3a-3d),
- automatically optically capturing (40) the measurement surroundings (3, 3a-3d) by means of the one or more optical units within the scope of changing the deployment of the coordinate measuring device (1) within the measurement surroundings (3, 3a-3d),
- ascertaining (21, 21') at least one task region (O, O'), as a region of the measurement surroundings (3, 3a-3d) to be surveyed, on the basis of the measurement surroundings (3, 3a-3d) captured thus,
- ascertaining (22, 22') at least one visual range (V, V'), as a region of the measurement surroundings (3, 3a-3d) surveyable from a position of the coordinate measuring device (1) adopted within the scope of the movement, on the basis of the measurement surroundings (3, 3a-3d) captured thus,
- checking the position (P1-P3) for the suitability thereof for a deployment on the basis of a combined analysis (23, 23') of the measurement region (M, M'), the task region (O, O') and the visual range (V, V').

## Revendications

1. Procédé pour établir un déploiement approprié d'une machine optoélectronique terrestre à mesurer des coordonnées (1) dans un environnement de mesure (3, 3a-3d), ladite machine à mesurer des coordonnées (1) étant conçue pour déterminer des coordonnées d'objet au moyen d'un faisceau de mesure,
- un domaine de mesure (M, M') étant mesuré (20, 20') à partir d'un premier déploiement (41),
- la machine à mesurer des coordonnées (1) étant déplacée à partir dudit premier déploiement (41) pour effectuer un changement de positionnement,
- l'environnement de mesure (3, 3a-3d) étant automatiquement capté (40) par voie optique dans le cadre dudit changement de positionnement,
- au moins un domaine d'activité (O, O') étant automatiquement établi (21, 21') au moyen dudit environnement de mesure (3, 3a-3d) ainsi capté, et constituant le domaine de l'environnement de mesure (3, 3a-3d) qu'il convient de mesurer,
- au moins un domaine visible (V, V') étant automatiquement établi (22, 22') au moyen dudit environnement de mesure (3, 3a-3d) ainsi capté, et constituant le domaine de l'environnement de mesure (3, 3a-3d) mesurable à partir d'une position (P1-P3) occupée dans le cadre du déplacement de la machine à mesurer des coordonnées (1), et
- le caractère approprié de ladite position (P1-P3) en tant que déploiement, en particulière deuxième déploiement et déploiement suivant, étant évalué compte tenu d'une analyse comparative automatique (23, 23') du domaine de mesure (M, M'), du domaine d'activité (O, O') et du domaine visible (V, V').

2. Procédé selon la revendication 1,
**caractérisé en ce que**
la capture optique (40) de l'environnement de mesure (3, 3a-3d) est effectuée de manière continue,
- le domaine d'activité (O, O') étant actualisé en continu au moyen de l'environnement de mesure (3, 3a-3d) capté en continu et/ou
- le caractère approprié en tant que déploiement étant également évalué en continu.

3. Procédé selon la revendication 1 ou 2,
**caractérisé en ce que**
la capture optique (40) de l'environnement de mesure (3, 3a-3d) est effectuée
- avec un faisceau de mesure au moyen d'un profilage et/ou d'un balayage grossier et/ou
- par voie photographique, au moyen d'une prise de vues panoramique, d'une stéréophotogrammétrie, d'une prise de vues en profondeur, d'un appareil photo télémétrique et/ou d'une caméra d'aperçu de la machine à mesurer des coordonnées (1).

4. Procédé selon l'une des revendications précédentes,
**caractérisé en ce que**
l'analyse comparative automatique (23, 23') comporte une vérification des chevauchements et/ou des lacunes du domaine de mesure (M, M'), du domaine d'activité (O, O') et/ou du domaine visible (V, V').

5. Procédé selon la revendication 4,
**caractérisé en ce que**
la présence de lacunes ou de chevauchements est établie au moyen de correspondances de points entre les domaines (M, M', O, O', V, V'),
- une lacune étant établie au moyen de points du domaine d'activité (O, O') qui n'ont pas de correspondances dans le domaine visible (V, V'), et/ou
- des correspondances de points étant établies compte tenu de distances entre les points, et/ou
- des correspondances de points étant établies compte tenu de comparaisons et/ou du suivi de caractéristiques d'image locales.

6. Procédé selon l'une des revendications précédentes,
**caractérisé en ce que**
dans le cadre dudit procédé, un avertissement de l'utilisateur est émis dès qu'il est constaté (25b) que la position (P3) est inappropriée pour un positionnement.

7. Procédé selon l'une des revendications précédentes,
**caractérisé en ce que**
dans le cadre dudit procédé
- une position (P1-P3) et/ou une zone de positionnement appropriée et/ou inappropriée à la mesure d'un autre domaine de mesure
- et/ou des lacunes de recouvrement existantes ou potentielles du domaine d'activité (O, O')
sont établies compte tenu d'un résultat (24) de l'évaluation et mises à disposition de l'utilisateur.

8. Procédé selon l'une des revendications précédentes,
**caractérisé en ce que**
une position (P1-P3) appropriée est également établie en tant que déploiement optimal, selon au moins un critère d'optimisation donné.

9. Procédé selon la revendication 8,
**caractérisé en ce que**
le critère d'optimisation concerne
- une conjonction sans lacune d'un autre domaine de mesure au premier domaine de mesure (M, M') avec un chevauchement défini du premier domaine de mesure (M, M') et/ou
- une mesure du domaine d'activité (O, O') avec
□ des positionnements aussi peu nombreux,
□ un temps de traitement aussi court,
□ un chemin (4) entre les positionnements aussi court
□ et/ou une précision géométrique relative des positionnements aussi élevée
que possible.

10. Procédé selon la revendication 8 ou 9,
**caractérisé en ce que**
le critère d'optimisation concerne
- un angle d'incidence du faisceau de mesure (5) sur les surfaces d'objet (50) et/ou
- la résolution de la mesure de coordonnées.

11. Procédé selon l'une des revendications précédentes,
**caractérisé en ce que**
il se produit
- dans le cadre de la capture optique de l'environnement de mesure (3, 3a-3d), une reconnaissance d'objets et/ou
- dans le cadre de l'établissement du domaine d'activité (O, O'), un filtrage des objets et/ou des domaines environnementaux qu'il convient de ne pas mesurer.

12. Procédé selon l'une des revendications précédentes,
**caractérisé en ce que**
dans le cas d'une machine automobile à mesurer des coordonnées (1), le déplacement de celle-ci et la mesure d'un autre domaine de mesure à partir d'une position (P1, P2) établie en tant qu'autre déploiement approprié sont effectués automatiquement.

13. Procédé selon l'une des revendications précédentes,
**caractérisé en ce que**
la capture optique de l'environnement de mesure (3, 3a-3d) est effectuée au moyen
- d'algorithmes de SLAM (Simultaneous Localization and Mapping, localisation et cartographie simultanées), de SLAM/LIDAR, de SfM (Structure from Motion, structure acquise à partir d'un mouvement) et/ou d'appariement dense d'images, notamment basés sur l'apprentissage profond, et/ou
- de données supplémentaires capturées par au moins un capteur de position, de direction et/ou d'accélération de la machine à mesurer des coordonnées (1).

14. Produit-programme d'ordinateur comportant un code de programme enregistré sur une unité de traitement électronique de données conçue sous la forme d'une unité de commande et d'évaluation et faisant partie d'une machine optoélectronique terrestre à mesurer des coordonnées (1), destiné à exécuter au moins les étapes suivantes du procédé selon la revendication 1 :
- capture optique automatique (40) d'un environnement de mesure (3, 3a-3d) dans le cadre d'un changement de déploiement de la machine à mesurer des coordonnées (1),
- au moyen dudit environnement de mesure (3, 3a-3d) ainsi capté, établissement (21, 21') d'au moins un domaine d'activité (O, O') constituant le domaine de l'environnement de mesure (3, 3a-3d) qu'il convient de mesurer,
- au moyen dudit environnement de mesure (3, 3a-3d) ainsi capté, établissement (22, 22') d'au moins un domaine visible (V, V') constituant le domaine de l'environnement de mesure (3, 3a-3d) mesurable à partir d'une position (P1-P3) occupée dans le cadre du déplacement de la machine à mesurer des coordonnées (1), et
- compte tenu d'une analyse comparative (23, 23') du domaine de mesure (M, M'), du domaine d'activité (O, O') et du domaine visible (V, V'), évaluation du caractère approprié de ladite position (P1-P3) en tant que déploiement.

15. Machine optoélectronique terrestre à mesurer des coordonnées (1), destinée à déterminer des coordonnées d'objet au moyen d'un faisceau de mesure, **caractérisée en ce que**
ladite machine à mesurer des coordonnées (1) présente
- une ou plusieurs unités optiques destinées à capter un environnement de mesure (3, 3a-3d) et
- une fonctionnalité d'évaluation du positionnement,
dans laquelle, lors de l'exécution de ladite fonctionnalité d'évaluation du positionnement, il se produit automatiquement :
- une mise à disposition d'un domaine de mesure (M, M') en tant que domaine de l'environnement de mesure (3, 3a-3d) déjà mesuré à partir d'un premier déploiement (41),
- une capture optique automatique (40) d'un environnement de mesure (3, 3a-3d) au moyen de ladite ou desdites unités optiques dans le cadre d'un changement de déploiement de la machine à mesurer des coordonnées (1) dans l'environnement de mesure (3, 3a-3d),
- au moyen dudit environnement de mesure (3, 3a-3d) ainsi capté, l'établissement (21, 21') d'au moins un domaine d'activité (O, O') constituant le domaine de l'environnement de mesure (3, 3a-3d) qu'il convient de mesurer,
- au moyen dudit environnement de mesure (3, 3a-3d) ainsi capté, l'établissement (22, 22') d'au moins un domaine visible (V, V') constituant le domaine de l'environnement de mesure (3, 3a-3d) mesurable à partir d'une position occupée dans le cadre du déplacement de la machine à mesurer des coordonnées (1), et
- compte tenu d'une analyse comparative (23, 23') du domaine de mesure (M, M'), du domaine d'activité (O, O') et du domaine visible (V, V'), une évaluation du caractère approprié de ladite position (P1-P3) en tant que déploiement.
